# EUROPÄISCHE PATENTSCHRIFT

(11) **EP 1 725 053 B1**
(45) Veröffentlichungstag und Bekanntmachung des Hinweises auf die Patenterteilung: **31.07.2013**
(21) Anmeldenummer: 06007004.2
(22) Anmeldetag: 31.03.2006
(51) Int. Cl.: H04W 4/02

(54) **Verfahren mobile Kommunikationssysteme und mobiles Endgerät zum Bereitstellen von aufenthaltsortsbezogenen Diensten**
Method, mobile communication systems and mobile terminal for providing location dependent services
Procédé, des systèmes de communication mobiles et terminal mobile pour fournir des services dépendants de la position

(30) Priorität: 21.05.2005 DE 102005023614
(43) Veröffentlichungstag der Anmeldung: 22.11.2006
(73) Patentinhaber: Deutsche Telekom AG, 53113 Bonn (DE)
(72) Erfinder: Leiber, Thomas, 69198 Schriesheim (DE); Böhm, Andreas, Dr. rer. nat., 64342 Seeheim-Jugenheim (DE); Felt, Elisabeth, Dipl.-Ing., 60599 Frankfurt (DE); Eckert, Jens, 65439 Flörsheim (DE)
(74) Vertreter: Blumbach Zinngrebe

(56) Entgegenhaltungen:
- WO-A1-2004/034721
- GB-A- 2 352 128
- US-A- 5 802 468

## Beschreibung

Die Erfindung betrifft ein Verfahren sowie ein mobiles Kommunikationssystem, mit welchen wenigstens einem mobilen Teilnehmer eines zellularen Mobilfunknetzes aufenthaltsortbezogene Dienste bereitgestellt werden können. Die Erfindung betrifft ferner ein mobiles Endgerät, welches für den Einsatz in einem solchen mobilen Kommunikationssystem geeignet ist.

Standortbezogene Dienste - im Englischen auch Location Based Services genannt - werden bei Mobilfunkkunden, wie zum Beispiel Handybenutzer, immer beliebter. Bei diesen Diensten handelt es sich um Informationen, Kinotips, Angebote und dergleichen aus einem bestimmten geographischen Bereich, welche Diensteanbieter Mobilfunkkunden bereitstellen, sobald sie sich in dem jeweiligen Bereich befinden.

Um einem Mobilfunkkunden standortbezogene Dienste anbieten zu können, ist eine möglichst genaue Ermittlung des Standortes des Mobilfunkkunden Voraussetzung. Innerhalb des in Europa und in Teilen der USA üblichen GSM (global sytem for mobile communication)-Netzes ist dies möglich. So kann der Mobilfunknetzbetreiber feststellen, an welcher Basisstation der Mobilfunkkunde eingebucht ist, oder zu welcher Basisstation das Endgerät des Mobilfunkkunden bei einem abgehenden Anruf zuerst versuchen würde, eine Verbindung aufzubauen.

Die Parameter, die zur Ermittlung des Standortes eines Mobilfunkkunden erforderlich sind, können aus den Standorten der Basisstationen gewonnen werden. Denn der Standort jeder Basisstation ist einem Längen- und Breitengrad zugeordnet, und zwar beispielsweise in dem WGS84(world geodetic system)-Format. Zusätzlich kann um jede Basisstation ein Kreis mit einem vorbestimmten Radius, oder eine anders definierte Fläche, zum Beispiel ein Polgonenzug gebildet werden. Der Radius des Kreises kann aus der Strahlungsintensität der Sendeantenne der jeweiligen Basisstation ermittelt werden. Jede Funkzelle kann somit unter Bezugnahme auf den Standort der im Mittelpunkt der Funkzelle liegenden Basisstation durch eine Vielzahl geographischer Daten dargestellt werden.

Ferner ist jeder Funkzelle eine eindeutige Zellen-Identifikationsnummer (CID von Cell Identification) zugeordnet, welche wiederum den geographischen Daten, die die Funkzelle definieren, zugeordnet ist.

Um den Aufenthaltsort eines Mobilfunkkunden noch genauer ermitteln zu können, können Funkzelle jeweils in mehrere Sektoren, beispielsweise in drei gleich große Sektoren unterteilt werden, wobei jedem Sektor einer Funkzelle eine eindeutige Zellen-Identifikationsnummer und somit ein bestimmter geographischer Bereich innerhalb der Funkzelle zugeordnet wird. Demzufolge kann nicht nur ermittelt werden, in welcher Zelle, sondern in welchem Sektor einer Zelle sich ein Mobilfunkkunde aufhält.

Damit ein Diensteanbieter einem Mobilfunkkunden standortbezogene Dienste anbieten kann, musste dieser bisher bei einem Mobilfunkanbieter über eine vorher festgelegte Schnittstelle anfragen, wo sich der Mobilfunkkunde aufhält. Da die derzeitigen Mobilfunkspezifikationen und -standards nicht auf die Erbringung standortbasierter Dienste ausgerichtet sind, ist es dem Mobilfunkanbieter nicht möglich, dem anfragenden Dienstanbieter sofort eine präzise Angabe über den Aufenthaltsort des Mobilfunkkunden zu geben. Denn der Mobilfunkanbieter kennt lediglich einen, mehrere Funkzellen enthaltenden lokalen Bereich (Loacation Area), in dem sich der Mobilfunkkunde aufhält. Die Daten von lokalen Bereichen stehen zum Beispiel in den Besucherregistern (Visitor Location Register, VLR), welche mobilen Vermittlungszentralen (Mobile Switching Center, MSC) eines zellularen Mobilfunknetzes zugeordnet sind.

Um einem Mobilfunkprovider genauere Positionsdaten über einen Mobilfunkteilnehmer mitteilen zu können, musste bisher aus dem Mobilfunknetz heraus ein Datenkanal zum Mobilfunkkunden aufgebaut werden, über den der Mobilfunkprovider für eine kurze Zeit feststellen kann, in welcher Zelle sich der Mobilfunkkunde gerade aufhält.

Diese Methode ist aufwendig und führt zu einer hohen Belastung des Mobilfunknetzes. Denn jedesmal, wenn der Mobilfunkanbieter den genauen Aufenthaltsort eines Mobilfunkkunden benötigt, muss ein Datenkanal über das Mobilfunknetz zum Mobilfunkkunden aufgebaut werden.

Aus WO 2004/034721 A1 ist ein Verfahren bekannt, um einem mobilen Endgerät in einem zellularen Kommunikationsnetz standortbezogene Informationen bereitzustellen, bei welchem eine Standortüberwachung durch das mobile Endgerät erfolgt. Zu diesem Zweck ist bei dem in WO 2004/034721 A1 beschriebenen Verfahren vorgesehen, dass ein standortbezogener Dienst eine Anfrage an das zellulare Kommunikationsnetzwerk übermittelt, wobei die Anfrage ein geographisches Gebiet und einen Zielteilnehmer umfasst. Das geographische Gebiet wird in eine Liste von Zell-IDs übersetzt, wobei die Zell-IDs die Zellen identifizieren, die ganz oder teilweise innerhalb der geographischen Zone liegen. Die Liste der Zell-IDs wird zu dem Endgerät des Zielteilnehmers übertragen, und wenn sich die Zelle ändert, in der sich das Endgerät befindet, prüft das Endgerät, ob die Zell-ID der neuen Zelle in der Liste der Zell-IDs enthalten ist. Wird eine Übereinstimmung festgestellt, sendet das Endgerät eine Nachricht an das Netzwerk, welches daraufhin dem standortbezogenen Dienst signalisiert, dass das Endgerät in das geographische Gebiet eingetreten ist oder dieses verlassen hat.

Der Erfindung liegt die Aufgabe zugrunde, ein Verfahren, ein mobiles Kommunikationssystem sowie ein mobiles Endgerät zur Verfügung zu stellen, mit denen es möglich ist, standortbezogene Dienste mobilen Teilnehmern unmittelbar nach deren Eintreten in ein vorbestimmmtes Gebiet bereitzustellen, ohne dass das drahtlose Kommunikationsnetz dadurch zusätzlich belastet wird.

Ein Kerngedanke der Erfindung ist darin zu sehen, eine Verwaltungseinrichtung, im Folgenden auch Gateway oder Permission und Privacy Gateway (PPGW) genannt, bereitzustellen, welche über eine Schnittstelle mit einem drahtlosen Kommunikationsnetz verbunden werden kann. Die Verwaltungseinrichtung dient vornehmlich dazu, Anfragen eines Applikationsservers, der standortbezogene Dienste bereitstellt, anzunehmen und mobile Endgeräte daraufhin zu überwachen, ob sie in eine vom Applikationsserver zu bedienende, vorbestimmte geographische Zone eingetreten oder ausgetreten sind. Das Ereignis, dass ein mobiles Endgerät in die vorbestimmte geographische Zone eingetreten, oder aus dieser Zone ausgetreten ist, kann vom mobilen Endgerät selbst erfasst werden.

Das oben genannte technische Problem löst die Erfindung zum einen durch die Verfahrensschritte des Anspruchs 1.

Danach wird Verfahren verfügbar gemacht, welches wenigstens einem mobilen Teilnehmer eines drahtlosen Kommunikationsnetzes einen aufenthaltsortbezogenen Dienst bereitstellt. Zunächst wird eine vorbestimmte geographische Zone einem Applikationsserver von einer Verwaltungseinrichtung zugeordnet. Die geographische Zone wird in der Regel von einem Diensteanbieter, der den Applikationsserver betreibt, vorab festgelegt.
Nunmehr wird die Position des mobilen Teilnehmers ermittelt. Ferner wird geprüft, ob der mobile Teilnehmer sich innerhalb der geographischen Zone befindet.
Der Applikationsserver wird von der Verwaltungseinrichtung benachrichtigt, wenn der mobile Teilnehmer sich in der vorbestimmten geographischen Zone aufhält, und
stellt daraufhin dem mobilen Teilnehmer einen aufenthaltsortbezogenen Dienst über das drahtlose Kommunikationsnetz bereit.

Vorteilhafte Weiterbildungen sind Gegenstand der Unteransprüche.

Gemäß einer besonderen Ausgestaltung des Verfahrens, überträgt der Applikationsserver einen aufenthaltsortbezogenen Dienst nur zu dem bestimmten mobile Teilnehmer, der sich in der vorbestimmten geographischen Zone aufhält.

Eine spürbare Entlastung des drahtlosen Kommunikationsnetzes bei der Lokalisierung des mobilen Teilnehmers ergibt sich dann, wenn der mobile Teilnehmer seine Position selbst ermittelt. Denn in diesem Fall wird nur ein einziges Mal eine Verbindung vom mobilen Teilnehmer zur Verwaltungseinrichtung über das drahtlose Kommunikationsnetz benötigt, und zwar dann, wenn der mobile Teilnehmer die vorbestimmte geographische Zone betritt.

Hierzu kann die vordefinierte geographische Zone von der Verwaltungseinrichtung zum mobilen Teilnehmer übertragen und dort abgelegt werden. Der mobile Teilnehmer prüft dann selbst, ob er sich innerhalb der geographischen Zone aufhält.

Alternativ kann der mobile Teilnehmer einen Teilnehmer-Identifikationscode sowie die von ihm ermittelte Position zur Verwaltungseinrichtung übertragen, die anhand dieser Informationen prüft, ob sich der mobile Teilnehmer innerhalb der geographischen Zone aufhält.

Damit der mobile Teilnehmer seine Position selbst ermitteln kann, können die Daten zur Ermittlung der Position des mobilen Teilnehmers von einem Navigationssystem, insbesondere einem GPS- oder A-GPS-Navigationssystem, anderen mobilen Teilnehmern und/oder von Netzzugangseinrichtungen zum mobilen Teilnehmer übertragen werden. Handelt es sich bei dem drahtlosen Kommunikationsnetz um ein drahtloses lokales Netzwerk, auch WLAN-Netz genannt, oder um ein auf der Bluetooth-Technologie basiertes Kommunikationsnetz, werden als Netzzugangseinrichtungen sogenannte Access Points oder Hot Spots verwendet. Diese Netzzugangseinrichtungen sind an vorbestimmten Standorten aufgestellt. Die die Standorte definierenden geographische Daten werden zum Beispiel zentral im Kommunikationsnetz und/oder in der jeweiligen Netzzugangseinrichtung gespeichert.

Bei einer vorteilhaften Weiterbildung handelt es sich bei dem drahtlosen Kommunikationsnetz um ein zellulares Mobilfunknetz, vorzugsweise dem GSM-Netz, wobei jeder Zelle des Mobilfunknetzes wenigstens ein Zellen-Identifikationscode zugeordnet wird.
Angemerkt sei an dieser Stelle, dass durch jeden Zellen-Identifikationscode ein geographischer Bereich festgelegt wird, der einer Funkzelle, oder zumindest einem Teil einer Funkzelle entspricht.

Wichtig ist darauf hinzuweisen, dass sowohl in der Beschreibung als auch in den Ansprüchen zwischen einer "geographischen Zone" und einem "geographischen Bereich" unterschieden wird. Unter "geographischer Zone" versteht man das Gebiet, welches wenigstens eine Zelle umschließt. Unter einem "geographischen Bereich" versteht man ein Gebiet, welches durch einen Zellen-Identifikationscode festgelegt wird. Der geographische Bereich kann mit der Fläche oder einer Teilfläche einer Funkzelle zusammenfallen.

Gemäß dem Verfahren wird die vordefinierte geographische Zone, die wenigstens eine Zelle enthält, einem Applikationsserver zugeordnet.
Der mobile Teilnehmer kann seine Position dadurch ermitteln, dass er über den Zellen-Identifikationscode der Zelle, in der er sich aktuell aufhält, informiert wird. Vorzugsweise wird der mobile Teilnehmer jedes Mal informiert, wenn er sich in eine neue Zelle hinein bewegt. In einem weiteren Schritt werden die Zellen-Identifikationscodes der Zellen, die zumindest teilweise in der vordefinierten geographischen Zone liegen, ermittelt. Die ermittelten Zellen-Identifikationscodes werden zu dem wenigstens einen mobilen Teilnehmer übertragen und dort abgespeichert. Der Zellen-Identifikationscode der Zelle, in der sich der mobile Teilnehmer aktuell aufhält, wird mit den abgespeicherten Zellen-Identifikationscodes verglichen. Der mobile Teilnehmer erzeugt ein erstes Hinweissignal, wenn der Zellen-Identifikationscode der Zelle, in der sich der mobile Teilnehmer aktuell aufhält, mit einem der abgespeicherten Zellen-Identifikationscodes übereinstimmt. Auf diese Weise wird geprüft, ob sich der mobile Teilnehmer innerhalb der geographischen Zone befindet. Unter Ansprechen auf das erste Hinweissignal wird der Applikationsserver von der Verwaltungseinrichtung darüber informiert, dass der mobile Teilnehmer sich in der vordefinierten geographischen Zone aufhält. Daraufhin stellt der Applikationsserver dem mobilen Teilnehmer einen aufenthaltsortbezogenen Dienst bereit.

Damit der Applikationsserver einen Überblick über die zu versorgenden Mobilfunkteilnehmer erhält, ist es nützlich zu wissen, wenn ein mobiler Teilnehmer eine geographische Zone wieder verlassen hat. Demzufolge erzeugt der mobile Teilnehmer ein zweites Hinweissignal, wenn der Zellen-Identifikationscode der Zelle, in der sich der mobile Teilnehmer aktuell aufhält, nicht mehr mit einem der abgespeicherten Zellen-Identifikationscodes übereinstimmt. Unter Ansprechen auf das zweite Hinweissignal wird der Applikationsserver darüber informiert, dass der mobile Teilnehmer die vordefinierte geographische Zone verlassen hat.

Vorteilhafterweise umfasst der Schritt zur Ermittlung von Zellen-Identifikationscodes folgende Schritte:
Zunächst werden mehrere Zellen-Identifikationscodes gespeichert. Jedem Zellen-Identifikationscode werden geographische Daten, die einen vorbestimmten geographischen Bereich darstellen, zugeordnet. Die den Zellen-Identifikationscodes zugeordneten geographischen Daten werden mit den der vordefinierten Zone zugeordneten geographischen Daten verglichen, um die Zellen-Identifikationscodes der Zellen, die wenigstens teilweise innerhalb der vordefinierten Zone liegen, zu ermitteln.

Damit nicht bei jeder Anfrage des Applikationsservers, wann ein mobiler Teilnehmer in die vorbestimmte geographische Zone eingetreten ist, die zu dieser Zone gehörenden Zellen-Identifikationscodes ermittelt werden müssen, werden die für jede vordefinierte Zone ermittelten Zellen-Identifikationscodes in einer Verwaltungseinrichtung gespeichert.

Um einen Missbrauch von Zellen-Identifikationscodes zu verringern, können die den Zellen zugeordneten Zellen-Identifikationscodes zu vorbestimmten Zeitpunkten geändert werden.

Verlässt zum Beispiel ein mobiler Teilnehmer eine vordefinierte geographische Zone, kann der mobile Teilnehmer durch einen Löschbefehl veranlasst werden, die der vordefinierten Zone zugeordneten Zellen-Identifikationscodes zu löschen.

Der mobile Teilnehmer ist ferner in der Lage, auf Änderungen einer geographischen Zone zu reagieren. Wird beispielsweise dem Applikationsserver eine weitere, vordefinierte geographische Zone zugeordnet, werden zunächst die Zellen-Identifikationscodes der in der neuen, vordefinierten geographischen Zone enthaltenen Zellen ermittelt. Anschließend werden die Zellen-Identifikationscodes der geographischen Zone und der neuen geographischen Zone verglichen. Der mobile Teilnehmer wird dann in Abhängigkeit des Vergleichsergebnisses aufgefordert, neue Zellen-Identifikationscodes hinzuzufügen und/oder nicht mehr benötigte Zellen-Identifikationscodes zu löschen.

Das Verfahren findet beispielsweise auch in einem drahtlosen lokalen Netzwerk, wie dem sogenannten WLAN Anwendung. Zudem kann dieses Verfahren in einem auf Bluetooth gestützten drahtlosen Kommunikationsnetz zum Einsatz kommen.

In diesem Fall weist das drahtlose Kommunikationsnetz mehrere Netzzugangseinrichtungen, auch Access Points oder Hot Spots genannt auf, denen jeweils ein Identifikationscode und ein Standort zugeordnet sind. Unter Steuerung der Verwaltungseinrichtung werden dann die Netzzugangseinrichtungen ermittelt werden, die innerhalb der geographischen Zone liegen. Ferner wird
die Position des mobilen Teilnehmers ermittelt, indem die Netzzugangseinrichtung ermittelt wird, an der der mobile Teilnehmer aktuell angemeldet ist. Danach wird geprüft, ob die Netzzugangseinrichtung, an der der mobile Teilnehmer angemeldet ist, sich innerhalb der vorbestimmten geographischen Zone befindet.

Zweckmäßigerweise ermittelt der mobile Teilnehmer selbst seine Position. Dazu überträgt die Verwaltungseinrichtung die Identifikationscodes der Netzzugangseinrichtungen, die innerhalb der geographischen Zone liegen, zum mobilen Teilnehmer. Der mobile Teilnehmer ermittelt dann wenigstens eine Netzzugangseinrichtung, an er aktuell angemeldet ist. Anschließend prüft der mobile Teilnehmer anhand der Identifikationscodes, ob die Netzzugangseinrichtung, an der der mobile Teilnehmer aktuell angemeldet ist, innerhalb der vorbestimmten geographischen Zone liegt.
Wenn die Netzzugangseinrichtung, an der der mobile Teilnehmer aktuell angemeldet ist, innerhalb der vorbestimmten geographischen Zone liegt, wird die Verwaltungseinrichtung informiert.

Mit dem Verfahren kann ferner sichergestellt werden, dass ein aufenthaltsortsbezogener Dienst nur einem bestimmten Teilnehmer von einem bestimmten, berechtigten Diensteanbieter bereitgestellt wird.
Dazu prüft die Verwaltungseinrichtung zunächst, ob ein aufenthaltsbezogener Dienst dem wenigstens einen mobilen Teilnehmer bereitgestellt werden darf; wenn ja, stellt der Applikationsserver einen aufenthaltsbezogenen Dienst nur diesem mobilen Teilnehmer bereit.

Um die Anzahl an Zugriffen auf den Applikationsserver und damit die Belastung des drahtlosen Kommunikationsnetzes reduzieren zu können wird wenigstens ein aufenthaltsortbezogener Dienste unmittelbar in dem mobilen Teilnehmer abgelegt. Dieser Dienst wird dem mobilen Teilnehmer bereitgestellt, wenn sich der mobile Teilnehmer in der vorbestimmten geographischen Zone aufhält.

Die oben genannte Aufgabe wird ebenfalls durch ein mobiles Kommunikationssystem gemäß Anspruch 17 gelöst.

Danach ist ein mobiles Kommunikationssystem vorgesehen, welches einen aufenthaltsortbezogenen Dienst wenigstens einem mobilen Teilnehmer eines drahtlosen Kommunikationsnetzes bereitstellen kann. Das Kommunikationssystem weist ein Navigationssystem, wenigstens eine Verwaltungseinrichtung und wenigstens einen diensteanbietenden Applikationsserver, der mit der Verwaltungseinrichtung verbunden ist, auf. Die Verwaltungseinrichtung ist derart ausgebildet, dass sie eine vordefinierte geographische Zone dem Applikationsserver zuordnen kann.

Die Verwaltungseinrichtung weist ferner eine Sendeeinrichtung zum Übertragen der geographischen Zone zu wenigstens einem mobilen Endgerät auf. Das mobile Endgerät weist eine Schnittstelle zur Kommunikation mit der Verwaltungseinrichtung, eine Speichereinrichtung zum Speichern der von der Verwaltungseinrichtung empfangenen geographischen Zone, eine Empfangseinrichtung zum Empfangen von Positionsdaten, eine Vergleichseinrichtung zum Vergleichen der geographischen Zone mit der aktuellen Position des mobilen Endgeräts, und
eine Einrichtung zum Erzeugen eines Hinweissignals auf, welches anzeigt, dass sich das mobile Endgerät innerhalb der geographischen Zone aufhält. Die Verwaltungseinrichtung informiert unter Ansprechen auf das Hinweissignal den Applikationsserver darüber, dass das mobile Endgerät sich in der vordefinierten geographischen Zone aufhält.

Die oben genannte Aufgabe wird ebenfalls durch ein mobiles Kommunikationssystem gemäß Anspruch 15 gelöst.

Das mobile Kommunikationssystem weist wenigstens eine Verwaltungseinrichtung auf, die einem Mobilfunknetz, vorzugsweise einem GSM-Netz, zugeordnet ist. Ferner ist wenigstens ein diensteanbietender Applikationsserver vorgesehen, der mit der Verwaltungseinrichtung verbunden ist, wobei die Verwaltungseinrichtung derart ausgebildet ist, dass sie eine vordefinierte geographische Zone, die wenigstens eine Zelle enthält, dem Applikationsserver zuordnet. Weiterhin ist wenigstens ein Zellen-Identifikationsserver vorgesehen, der Teil des Mobilfunknetzes ist und auf eine Zuordnungstabelle zugreifen kann, die jedem gespeicherten Zellen-Identifikationscode geographische Daten, die einen vorbestimmten geographischen Bereich darstellen, zuordnet. Der Zellen-Identifikationsserver ist weiterhin derart ausgebildet, dass er unter Ansprechen auf ein Anforderungssignal der Verwaltungseinrichtung Zellen-Identifikationscodes der Zellen, die zumindest teilweise innerhalb der vordefinierten geographischen Zone liegen, der Verwaltungseinrichtung übergibt. Die Verwaltungseinrichtung ist ferner zum Übertragen der empfangenen Zellen-Identifikationscodes zu wenigstens einem mobilen Endgerät ausgebildet. Das mobile Endgerät weist folgende Merkmale auf: Eine Schnittstelle zur Kommunikation mit der Verwaltungseinrichtung, eine Einrichtung zum Speichern der von der Verwaltungseinrichtung empfangenen Zellen-Identifikationscodes, eine Empfangseinrichtung zum Empfangen der Zellen-Identifikationscodes der Zelle, in der sich das mobile Endgerät aktuell aufhält, eine Vergleichseinrichtung zum Vergleichen des Zellen-Identifikationscodes der Zelle, in der sich der mobile Teilnehmer aktuell aufhält, mit den abgespeicherten Zellen-Identifikationscodes sowie eine Einrichtung zum Erzeugen eines Hinweissignals, welches anzeigt, dass der Zellen-Identifikationscode der Zelle, in der sich der mobile Teilnehmer aktuell aufhält, mit einem der abgespeicherten Zellen-Identifikationscodes übereinstimmt.

Die Verwaltungseinrichtung ist zudem derart ausgebildet, dass sie den Applikationsserver unter Ansprechen auf das Hinweissignal darüber informiert, dass das mobile Endgerät sich in der vordefinierten geographischen Zone aufhält.

Die Verwaltungseinrichtung und der Applikationsserver kommunizieren vorzugsweise über das Internet.

An dieser Stelle sei angemerkt, dass die Verwaltungseinrichtung nicht Bestandteil des Mobilfunknetzes sein muss. In diesem Fall ist eine Schnittstelle vorgesehen, über die die Verwaltungseinrichtung mit dem Mobilfunknetz kommunizieren kann. Die Verwaltungseinrichtung kann aber auch Teil des Mobilfunknetzes sein, indem sie beispielsweise in einer mobilen Vermittlungszentrale (MSC) implementiert wird.

Ein Vorteil der Erfindung ist darin zu sehen, dass nicht der Mobilfunk-Provider sich um den genauen Aufenthaltsort eines Mobilfunkteilnehmers kümmern muss, sondern dass diese Aufgabe von dem Mobilfunkteilnehmer selbst und/oder von einer mit dem Mobilfunknetz verbundenen Verwaltungseinrichtung übernommen wird.

Das oben genannte technische Problem wird weiterhin durch die Merkmale des Anspruchs 18 gelöst.

Danach ist ein mobiles Endgerät zur Durchführung des oben beschriebenen Verfahrens vorgesehen.

Die Erfindung wird nachfolgend anhand von zwei Ausführungsbeispielen in Verbindung mit den Zeichnungen näher erläutert. Es zeigen:
- Fig. 1: in schematischer Darstellung ein Mobilfunknetz und ein daran angeschlossenes Gateway zum Bereitstellen von standortbezogenen Diensten,
- Fig. 2: ein Blockschaltbild des in Fig. 1 dargestellten CID-Servers und
- Fig. 3: ein Blockschaltbild des in Fig. 1 dargestellten mobilen Endgerätes.
- Fig. 4: in schematischer Darstellung ein WLAN und ein daran angeschlossenes Gateway zum Bereitstellen von standortbezogenen Diensten,
- Fig. 5: ein Blockschaltbild des in Fig. 4 dargestellten APID-Servers und
- Fig. 6: ein Blockschaltbild des in Fig. 4 dargestellten mobilen Endgerätes.

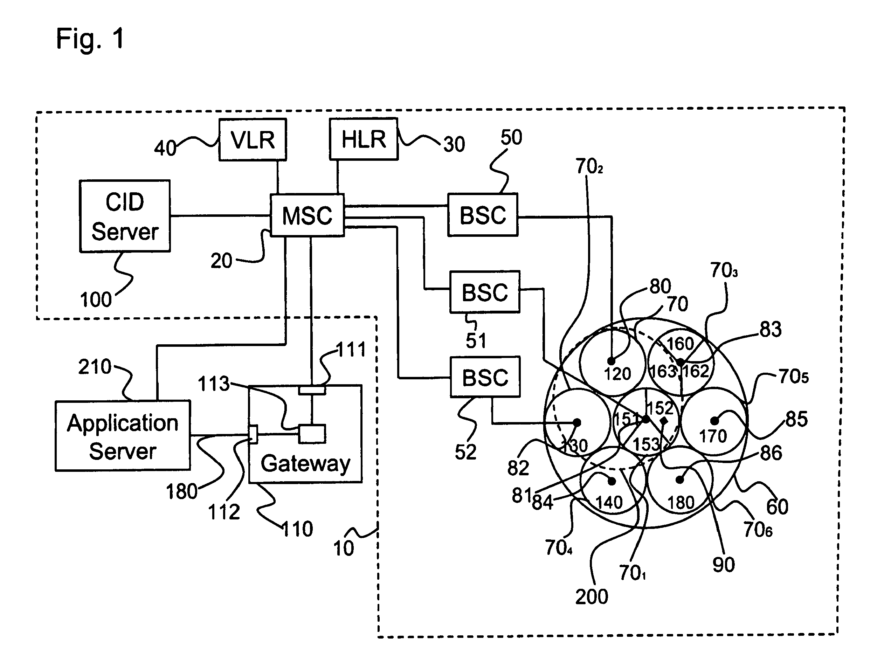

Fig. 1 zeigt in vereinfachter Darstellung ein allgemein mit 10 bezeichnetes Mobilfunknetz, in dem die Erfindung verwirklicht werden kann. Bei dem Mobilfunknetz kann es sich um ein GSM-Netz handeln.

In an sich bekannter Weise weist das Mobilfunknetz 10 eine mobile Vermittlungszentrale 20, auch Mobile Switching Center (MSC) genannt, auf, an welches ein Heimatregister 30 und ein Besucherregister 40 angeschlossen sind. Beispielsweise sind an die mobile Vermittlungszentrale 20 drei Basisstationssteuerschaltungen 50, 51 und 52 angeschlossen, die jeweils mit einer Basisstation verbunden sind. So ist beispielsweise die Basisstationssteuerschaltung 50 mit der Basisstation 80, die Basisstationssteuerschaltung 51 mit der Basisstation 81 und die Basisstationssteuerschaltung 52 mit der Basisstation 82 verbunden. Die übrigen Basisstationen 84 bis 86 sind ebenfalls mit nicht dargestellten Basisstationssteuerschaltungen verbunden. Jede Basisstation versorgt eine Funkzelle, deren Fläche lediglich beispielhaft kreisförmig dargestellt ist. Im vorliegenden Beispiel versorgt die Basisstation 80 eine Funkzelle 70, die Basisstation 81 die Funkschnittstelle 70₁, die Basisstation 82 die Funkzelle 70₂, die Basisstation 83 eine Funkzelle 70₃, die Basisstation 84 die Funkschnittstelle 70₄, die Basisstation 85 die Funkzelle 70₅ und die Basisstation 86 eine Funkzelle 70₆. Jede Basisstation ist georeferenziert, das bedeutet, dass der Standort jeder Basisstation jeweils einem Längen- und Breitengrad, beispielsweise im WGS84-Format, zugeordnet ist. Wenn die Basisstationen 80 bis 86 im Mittelpunkt der kreisförmigen Funkzellen 70 bis 70₆ angeordnet sind und ein Radius mit bestimmter Länge jeder Funkzelle zugeordnet wird, kann die Fläche, d. h. der geographische Bereich jeder Funkzelle durch geographische Daten beschrieben werden. Die Funkzellen 70₁ und 70₃ sind beispielsweise in drei Sektoren, die jeweils einen Winkel von 120° abdecken, unterteilt. Mit andern Worten bilden in diesem Beispiel jeweils drei zusammenhängende geographische Bereiche die Fläche dieser Funkzellen.

Jeder Funkzelle ist zumindest eine eindeutige Zellen-Identifikationsnummer CID zugeordnet. Im vorliegenden Beispiel sind der Funkzelle 70 die CID 120, der in drei Sektoren unterteilten Funkzelle 70₁ die CIDs 151, 152 und 153, der Funkzelle 70₂ die CID 130, der in drei Sektoren unterteilten Funkzelle 70₃ die CIDs 160, 162 und 163, der Funkzelle 70₄ die CID 140, der Funkzelle 70₅ die CID 170 und der Funkzelle 70₆ die CID 170 zugeordnet. Jede CID repräsentiert einen geographischen Bereich, der entweder die Gesamtfläche einer Funkzelle, oder eine Teilfläche einer Funkzelle, wie bei den Funkzellen 70₁ und 70₃, beschreibt. Die Funkzellen 70 bis 70₆ bilden einen lokalen Bereich 60, der im Besucherregister 40 abgelegt sein kann.

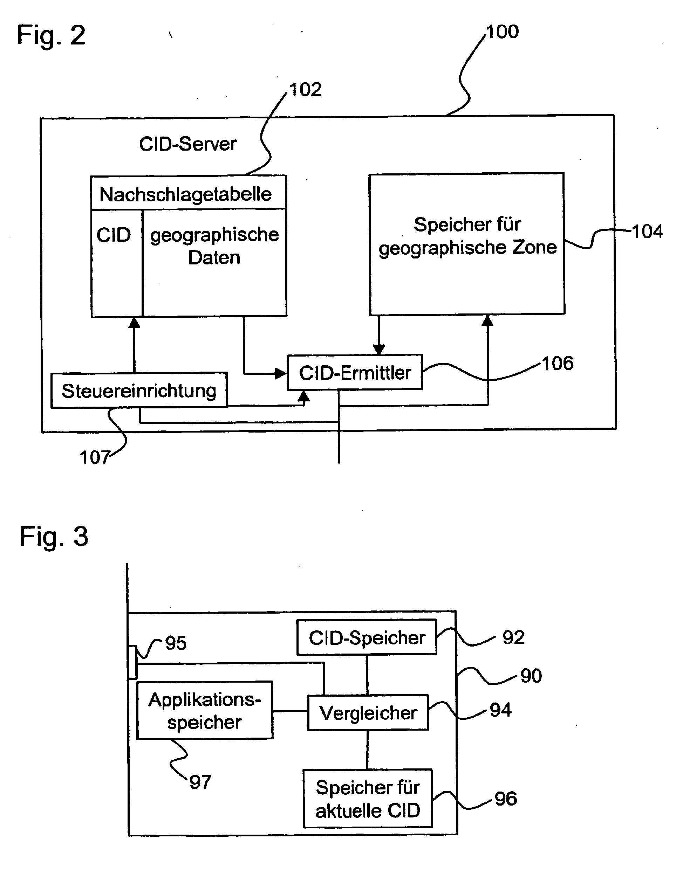

Die den Funkzellen zugeordneten Zellen-Identifikationsnummern CID und die ihnen jeweils zugeordneten geographischen Bereiche sind in einer Nachschlagetabelle 102 eines in Fig. 2 dargestellten CID-Servers 100 abgelegt.

Im vorliegenden Beispiel ist außerhalb des Mobilfunknetzes 10 eine Verwaltungseinrichtung 110 implementiert, die beispielsweise als Gateway fungiert. Die Verwaltungseinrichtung 110 kann zum Beispiel auch in der mobilen Vermittlungszentrale 20 innerhalb des Mobilfunknetzes angeordnet sein. Die Verwaltungseinrichtung 110 ist über eine Schnittstelle 112 mit einem, von einem Diensteanbieter betriebenen Applikationsserver 210 und über eine Schnittstelle 111 mit der mobilen Vermittlungszentrale 20 des Mobilfunknetzes 10 verbunden. Verwaltungseinrichtung 110 und Applikationsserver 210 können über eine Internetverbindung 180 miteinander kommunizieren.

Der Applikationsserver 210 dient dazu, einem Mobilfunkteilnehmer einen standortbezogenen Dienst bereitzustellen und anzubieten. Demzufolge kann der Applikationsserver 120 mit der mobilen Vermittlungssteuereinrichtung 20 verbunden sein. Der Applikationsserver 120 muss ferner wissen, wo sich ein Mobilfunkteilnehmer mit seinem mobilen Endgerät 90 im Augenblick aufhält.

Wie nachfolgend noch näher erläutert wird, ist es Hauptaufgabe der Verwaltungseinrichtung 110, den Applikationsserver 210 zu informieren, wenn ein Mobilfunkteilnehmer eine vom Diensteanbieter festgelegte geographische Zone 200 betritt oder wieder verlässt. Im vorliegenden Beispiel enthält die geographische Zone 200 die Funkzellen 70 bis 70₄.

Um diese Funktion erfüllen zu können, arbeitet die Verwaltungseinrichtung mit dem in Fig. 3 näher dargestellten mobilen Endgerät 90, welches ein Handy sein kann, zusammen. Das Handy 90 kommuniziert über eine Schnittstelle 95 mit dem Mobilfunknetz 10. Neben einem CID-Speicher 92 weist das mobile Endgerät 90 einen Speicher 96, der die Zellen-Identifikationsnummer derjenigen Zelle speichert, in der sich das mobile Endgerät 90 aktuell befindet, und einen Vergleicher 94 auf. Wie weiter unten noch näher geschildert wird, ist das mobile Endgerät 90 selbst in der Lage, festzustellen, wenn es in die geographische Zone 200 eintritt oder die Zone 200 wieder verlässt. In diesem Zusammenhang ist es wichtig darauf hinzuweisen, dass der CID-Server 100 ferner einen Speicher 104 zum Ablegen von geographischen Daten enthält, die die geographische Zone 200 definieren. Ferner ist in dem CID-Server 100 eine CID-Ermittlungseinrichtung 106 implementiert, die die Zellen-Identifikationsnummern CID derjenigen Funkzellen ermittelt, die vollständig oder zumindest teilweise innerhalb der geographischen Zone 200 liegen. Eine Steuereinrichtung 107 steuert beispielsweise den Datenfluss zur Nachschlagetabelle 102, zur CID-Ermittlungseinrichtung 106, zum Speicher 104 und/oder zur Verwaltungseinrichtung 110.

Nachfolgend wird die Funktionsweise des in Fig. 1 dargestellten Mobilfunknetzes 10 in Verbindung mit der Verwaltungseinrichtung 110, dem Applikationsserver 120 und dem Handy 90 näher erläutert.

Mit Hilfe der Verwaltungseinrichtung 110 und dem weiterentwickelten Handy 90 ist es nunmehr möglich, standortbezogene Dienste einem Mobilfunkkunden im sogenannten Pushbetrieb , h. h. in Abhängigkeit vom Auftreten eines Ereignisses, sofort bereitstellen zu können. Eine solche ereignisbezogene Bereitstellung von Diensten ist auch unter dem englischen Ausdruck "Triggered Location Reporting Service (TLRS)" bekannt, welche herkömmliche Mobilfunknetze nicht unterstützen.

Damit der Applikationsserver 210 einen standortbezogenen Dienst zum Handy 90 übertragen kann, wird vom Dienstbetreiber zunächst eine geographische Zone, im vorliegenden Beispiel die Zone 200 definiert. Die geographischen Daten, welche die Zone 200 festlegen, werden vom Applikationsserver 120 zur Verwaltungseinrichtung 110 übertragen. Die Verwaltungseinrichtung 110 ordnet dann die Zone 200 dem Applikationsserver 210 zu, indem sie beispielsweise die die Zone 200 definierenden geographischen Date unter einer Adresse, die dem Applikationsserver 210 zugewiesen wird, in einem Speicher 113 ablegt. Auf diese Weise kann die Verwaltungseinrichtung 110 auch mehrere Applikationsserver eines oder mehrerer Diensteanbieter verwalten.

Wie Fig. 1 zeigt, liegen die Funkzellen 70, 70₁ vollständig, und die Funkzellen 70₂, 70₃ und 70₄ teilweise in der Zone 200. Ferner sei angenommen, dass lediglich der der CID 163 der Funkzelle 70₃ zugeordnete geographische Bereich von der Zone 200 erfasst wird. Eine derart präzise Erfassung von Funkzellen oder Teilen von Funkzellen innerhalb der Zone 200 ist Dank der Unterteilung von Funkzellen in Sektoren möglich.

Bevor das Handy 90 feststellen kann, ob es die geographische Zone 200 betreten oder verlassen hat, muss die Verwaltungseinrichtung 110 zunächst eine Verbindung zum CID-Server 100 über die mobile Vermittlungszentrale 120 des Mobilfunknetzes 10 herstellen. Danach fordert die Verwaltungseinrichtung 110 vom CID-Server 100, welcher als Zellen-Identifikationsserver 100 dient, die Zellen-Identifikationscodes der Zellen an, die zumindest teilweise in der vordefinierten geographischen Zone 200 liegen. Hierzu überträgt die Verwaltungseinrichtung 110 die die geographische Zone 200 darstellenden geographischen Daten zum CID-Server 100, der die Daten im Speicher 104 ablegt. Der CID-Server 100 vergleicht nunmehr zum Beispiel mit Hilfe der CID-Ermittlungseinrichtung 106 die im Speicher 104 abgelegten Daten mit den in der Nachschlagetabelle 102 gespeicherten geographischen Daten, um die Zellen oder Zellenabschnitte und somit die CIDs zu finden, welche innerhalb der geographischen Zone 200 liegen. Im vorliegenden Fall ist die CID-Ermittlungseinrichtung 106 derart programmiert, dass er erkennt, dass die Zellen-Identifikationsnummern 151, 152 und 153 der Funkzelle 70₁, die Zellen-Identifikationsnummer 163 der Funkzelle 70₃, die Zellen-Identifikationsnummer 120 der Funkzelle 70, die Zellen-Identifikationsnummer 130 der Funkzelle 70₂ sowie die Zellen-Identifikationsnummer 140 der Funkzelle 70₄ innerhalb der Zone 200 liegen. Unter Steuerung der Steuereinrichtung 107 überträgt die CID-Ermittlungseinrichtung 106 eine CID-Liste der ermittelten Zellen-Identifikationsnummern zur Verwaltungseinrichtung 110, welche dann über einen Funkkanal die CID-Liste an das Handy 90 überträgt. Die in der Liste enthaltenen Zellen-Identifikationsnummern, welche diejenigen Zellen kennzeichnen, die zumindest teilweise innerhalb der geographischen Zone 200 liegen, werden dann in dem CID-Speicher 92 abgelegt. Das Handy 90 ist derart ausgebildet, dass es regelmäßig die Zellen-Identifikationsnummer CID von der Basisstation mitgeteilt bekommt, in dessen Zelle oder Sektor sich das Handy 90 im Augenblick aufhält. Ferner ist der Vergleicher 94 des Handys 90 derart ausgebildet, dass er beim Wechsel einer Funkzelle oder eines Sektors die aktuelle Zellen-Identifikationsnummer, die im Speicher 96 abgelegt wird, mit den im CID-Speicher 92 abgelegten Zellen-Identifikationsnummern, welche die geographische Zone 200 darstellen, vergleicht.

Im vorliegenden Beispiel sei nunmehr angenommen, dass sich das Handy 90 aus der Zelle 70₅ in den durch die Zellen-Identifikationsnummer 152 gekennzeichneten Sektor der Funkzelle 70₁ hinein bewegt. Das Handy 90 stellt über den Vergleicher 94 fest, dass die Zellen-Identifikationsnummer 152 und somit der dazu gehörende Zellensektor innerhalb der geographischen Zone 200 liegt. Daraufhin erzeugt das Handy 90 ein Hinweissignal, das signalisiert, dass das Handy 90 in die geographische Zone 200 eingetreten ist. Anschließend überträgt das Handy 90 das Hinweissignal über den Funkkanal zur Verwaltungseinrichtung 110. Die Verwaltungseinrichtung 110 informiert beispielsweise über die aufgebaute Internetverbindung 180 den Applikationsserver 120 darüber, dass das Handy 90 in die vom Diensteanbieter definierte geographische Zone 200 eingetreten ist. Hierzu kann die Verwaltungseinrichtung 110 zum Beispiel die Rufnummer oder einen anderen Identifizierungscode des Handys 90, welche oder welcher im Speicher 113 abgelegt sein kann, zum Applikationsserver 210 übertragen. Gemäß einer vorteilhaften Ausgestaltung leitet die Verwaltungseinrichtung 110 jedoch die Rufnummer des Handys 90 nur dann zum Applikationsserver 210 weiter, wenn dass Handy zuvor für den Applikationsserver 210 freigeschaltet worden ist. Der Applikationsserver 120 kann nunmehr den für die geographische Zone 200 bestimmten lokalen Dienst an das Handy 90 absenden.

Verlässt das Handy 90 die Zelle 70₁ und kehrt in die Zelle 70₅ zurück, so erkennt der Vergleicher 94 des Handys 90, dass die geographische Zone 200 verlassen worden ist. Daraufhin wird ein weiteres Hinweissignal vom Handy 90 erzeugt, welches über die Verwaltungseinrichtung 110 zusammen mit der Rufnummer des Handys 90 zum Applikationsserver 120 gesendet wird. Der Applikationsserver 210 erfährt durch das Hinweissignal, dass das Handy 90 die geographische Zone 200 verlassen hat und beendet die Übertragung des für das Handy 90 bestimmten Dienstes.

Der Applikationsserver 210 und/oder die Verwaltungseinrichtung 110 sind derart ausgebildet, dass sie dem mobilen Endgerät 90 mitteilen können, vorbestimmte Zellen-Identifikationsnummern zu löschen. Auf diese Weise kann die vordefinierte geographische Zone 200 gezielt verkleinert oder, wenn alle zu der geographischen Zone 200 gehörenden Zellen-Identifikationsnummern gelöscht werden, auch vollständig gelöscht werden. Das Handy 90 ist derart ausgebildet, dass nach Löschen der gewünschten Zellen-Identifikationsnummern ein Bestätigungssignal zur Verwaltungseinrichtung 110 übertragen wird, welches wiederum dem Applikationsserver 120 signalisiert, dass die gewünschten Zellen-Identifikationsnummern gelöscht worden sind.

Weiterhin ist der Applikationsserver 120 in Verbindung mit der Verwaltungseinrichtung 110 in der Lage, vorab definierte geographische Zonen zu verändern. Hierzu kann eine neue geographische Zone zur Verwaltungseinrichtung 110 übertragen werden, welche wiederum die zur neuen Zone gehörenden geographischen Daten zum CID-Server 100 überträgt. Wie weiter oben bereits ausgeführt, ist die CID-Ermittlungseinrichtung 106 des CID-Servers 100 in der Lage, die Zellen-Identifikationsnummern und somit die Zellen zu ermitteln, die zumindest teilweise innerhalb der neuen Zone liegen. Die aufgefundenen Zellen-Identifikationsnummern werden anschließend zur Verwaltungseinrichtung 110 übertragen, welche die Liste der Zellen-Identifikationsnummern zum mobilen Endgerät 90 weiterleitet. Das Handy 90 ist derart ausgebildet, dass es die Zellen-Identifikationsnummern der aktuellen geographischen Zone 200 mit den der neuen Zone vergleichen kann. Auf diese Weise können CIDs der Zone 200, die nicht von der neuen Zone erfasst werden, gelöscht, und nicht von der Zone 200 erfasste CIDs neu hinzugefügt werden. Somit kann die bisherige Zone 200 gezielt verändert werden.

Die zu der geographischen Zone 200 oder jeder anderen Zone ermittelten CIDs können im 113 Speicher der Verwaltungseinrichtung 110 gespeichert werden. Dadurch wird verhindert, dass die Verwaltungseinrichtung 110 jedesmal mit dem CID-Server 100 verbunden werden muss, wenn der Applikationsserver 210 standortbezogene Dienste einem mobilen Teilnehmer in einer bestimmten Zone bereitstellen will, die früher schon einmal von ihm bedient worden ist. Auf diese Weise kann die Verwaltungseinrichtung 110 unter Umgehung des CID-Servers 100 dem mobilen Endgerät 90 unmittelbar die Zellen-Identifikationsnummern, die innerhalb der angeforderten Zone liegen, zukommen lassen.

Angemerkt sei noch, dass die Genauigkeit, mit der der Applikationsserver 210 standortbezogene Dienste mobilen Endgeräten bereitstellen kann, unter anderem davon abhängt, welcher Algorithmus zur geographischen Beschreibung von Zellen und geographischen Zonen verwendet wird. Wie bereits oben ausgeführt, können Zellen durch einen Kreis angenähert werden, der durch einen geographisch definierten Mittelpunkt und einen Radius mit einer vorbestimmten Länge beschrieben wird. Anstatt den geographischen Bereich einer Zelle durch einen Kreis zu beschreiben, kann die Zelle auch durch eine Polygonfläche beschrieben werden.

Die Erfindung kann auch in anderen drahtlosen Kommunikationsnetzen, wie zum Beispiel in einem WLAN-Netz oder einem auf der Bluetooth-Technologie basierenden drahtlosen Kommunikationsnetz verwirklicht werden.

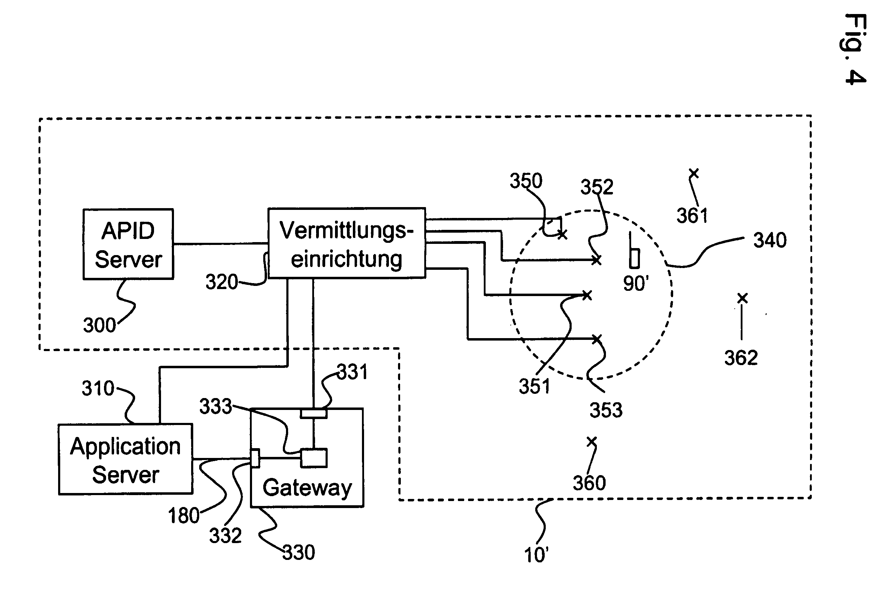

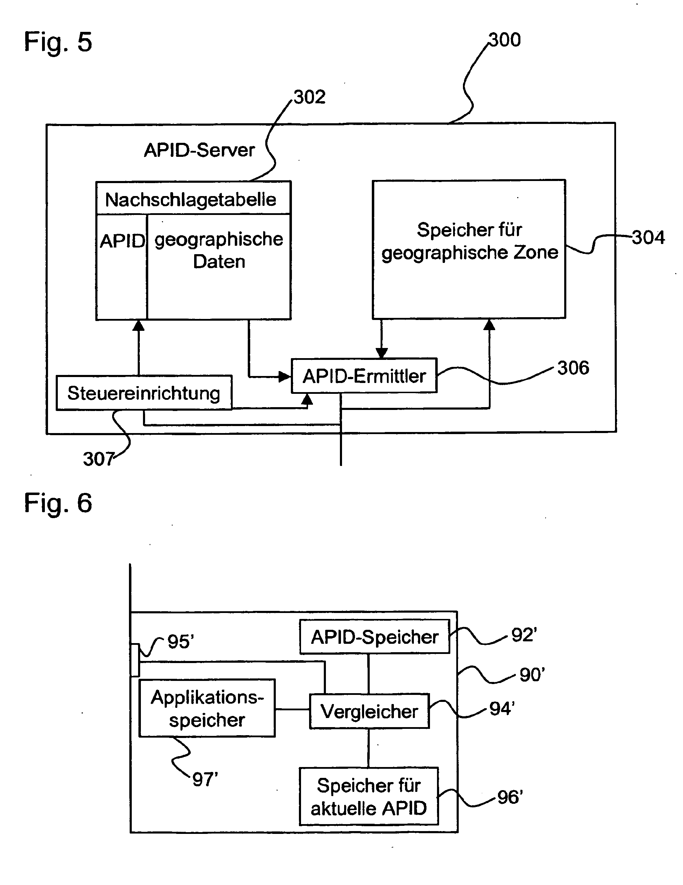

Fig. 4 zeigt in vereinfachter Darstellung ein WLAN-Netz 10'. Das WLAN-Netz 10' weist in an sich bekannter Weise mehrere Netzzugangspunkte, auch Access Points genannt auf. Im vorliegenden Beispiel sind sieben Access Points dargestellt, die mit den Bezugszeichen 350, 351, 352, 353, 360, 361 und 362 bezeichnet sind. Die Access Points sind beispielsweise über eine Vermittlungseinrichtung 320 mit einem Gateway 330, welches auch als Verwaltungseinrichtung bezeichnet wird, verbunden. Hierzu weist die Verwaltungseinrichtung 330 eine Schnittstelle 331 auf. Die Verwaltungseinrichtung 330 entspricht im Aufbau und in der Funktionsweise im Wesentlichen dem in Fig. 1 dargestellten Gateway 110. Lediglich der einfachen Darstellung wegen sind die Access Points 350 bis 353 mit der Vermittlungseinrichtung 320 verbunden. Denkbar ist auch eine Ausführungsform, bei der die Access Points 350 bis 362 unmittelbar an die Schnittstelle 331 der Verwaltungseinrichtung 330 angeschlossen sein können. Über eine Internetverbindung 180 kann ein Applikationsserver 310 mit einer Schnittstelle 323 der Verwaltungseinrichtung 330 verbunden werden. An die Vermittlungseinrichtung 320 ist ein APID-Server 300 angeschlossen, der in Fig. 6 näher dargestellt ist. Sowohl der APID-Server 300 als auch die Vermittlungseinrichtung 320 gehören zum WLAN-Netz 10'. Ähnlich dem CID-Server 100 des in Fig.1 gezeigten GSM-Netzes 10 weist der APID-Server 300 eine Nachschlagetabelle 302 auf, in der die Identifikationsnummer APID sowie die geografischen Daten des Standortes jedes Access-Points des WLAN-Netzes 10' abgelegt sind. Ferner weist der APID-Server 300 einen Speicher 304 auf, in dem die geographischen Daten, welche eine vorbestimmte geographische Zone definieren, abgelegt werden können. Die geographische Zone ist in Fig. 4 mit Bezugszeichen 340 dargestellt. Bei der geographischen Zone 340 handelt es sich um eine von einem Diensteanbieter vorgegebene Zone, innerhalb derer mobile Teilnehmer vom Applikationsserver 310 mit standortbezogenen Diensten versorgt werden können. Im vorliegenden Beispiel befinden sich die Access-Points 350 bis 353 innerhalb dieser vorbestimmten geographischen Zone 340. Ferner weist der APID-Server 300 eine Steuereinrichtung 307 auf, die einen APID-Ermittler 306 ansteuern kann, damit dieser diejenigen Access-Points sucht, die innerhalb der geographischen Zone 340 liegen. Hierzu kann der APID-Ermittler 306 sowohl auf die Nachschlagetabelle 302 als auch auf den Speicher 304 zugreifen.

Die Verwaltungseinrichtung 330 weist ebenfalls einen Speicher 333 auf, in dem unter anderem die vom Applikationsserver 310 übermittelte geographische Zone 340 sowie die vom APID-Server 300 ermittelten Access-Points abgelegt werden können.

Innerhalb der Zone 340 ist ein mobiles Endgerät 90' dargestellt, welches dem in Fig. 1 gezeigten mobilen Endgerät 90 ähnlich ist. Das mobile Endgerät 90' meldet sich im Unterschied zum mobilen Endgerät 90 nicht an einer der Basisstationen, sondern an einem oder mehreren Access-Points des WLAN-Netzes 10' an. Wie in Fig. 6 näher dargestellt ist, weist das mobile Endgerät 90' eine Schnittstelle 95' auf, über die es mit den Access-Points kommunizieren kann. Ferner ist ein Applikationsspeicher 97' im mobilen Endgerät 90' implementiert, in welchem zum Beispiel der im Internet eingebettete Applikationsserver 310 vorbestimmte standortbezogene Dienste ablegen kann. Das mobile Endgerät 90' enthält zudem einen Speicher 96', in dem der Identifizierungscode APID desjenigen Access-Points abgelegt wird, an dem das mobile Endgerät 90' aktuell angemeldet ist. Das mobile Endgerät 90' weist hierzu eine geeignete Kommunikationssoftware auf, über die das mobile Endgerät 90' mit den Access-Points kommunizieren kann.

Ferner kann in dem mobilen Endgerät 90' ein APID-Speicher 92' implementiert sein, in dem die vom APID-Server 300 ermittelten Access-Points, welche innerhalb der geographischen Zone 340 liegen, abgelegt werden. Mit Hilfe eines Vergleichers 94' kann das mobile Endgerät 90' selbst ermitteln, ob es sich innerhalb der geographischen Zone 340 befindet. Hierzu muss der Vergleicher 94' lediglich prüfen, ob die Identifikationsnummer APID des Access-Points, an dem das mobile Endgerät 90' aktuell angemeldet ist, innerhalb der geographischen Zone 340 liegt.

Für den Fall, dass das mobile Endgerät 90' beispielsweise einen GPS-Empfänger enthält, wird der APID-Server 300 zur Ermittlung des Aufenthaltsortes nicht benötigt. Statt dessen werden die geographischen Daten der geographische Zone 340 vom Applikationsserver 310 über das Gateway 330 zum mobile Endgerät übertragen und beispielsweise in dem Speicher 92' abgelegt. Das mobile Endgerät 90' vergleicht dann die über den GPS- Empfänger empfangenen Positionsdaten mit der im Speicher 92' abgelegten geographischen Zone. Auf diese Weise kann das mobile Endgerät 90' wiederum ermitteln, ob es sich innerhalb der geographischen Zone 340 befindet. Ein ähnlicher Lösungsansatz ist selbstverständlich auch in Verbindung mit dem in Fig. 1 dargestellten GSM-Netz 10 denkbar.

Alternativ ist denkbar, dass die Prüfung, ob das mobile Endgerät 90' sich innerhalb der geographischen Zone 340 aufhält, auch von der Verwaltungseinrichtung 330 durchgeführt wird. Bei diesem Ausführungsbeispiel sind die Access-Points 350 bis 362 in der Lage, der Verwaltungseinrichtung 330 ihre eigenen Identifizierungscodes APID und die Teilnehmeridentifizierungscodes der mobilen Endgeräte mitzuteilen, die an den jeweiligen Access-Points im Augenblick angemeldet sind. Über den APID-Server 300 kann sich die Verwaltungseinrichtung 330 wiederum die Identifizierungscodes der Access Points holen, die innerhalb der geografischen Zone 340 liegen. Ein nicht dargestellter Vergleicher prüft dann die von den Access Points und dem AOID-Server 300 erhaltenen Identifizierungscodes Ferner auf Übereinstimmung. Wird eine Übereinstimmung von wenigstens zwei Identifizierungscodes festgestellt, kann die Verwaltungseinrichtung die mobilen Endgeräte ermitteln, die innerhalb der geografischen Zone 340 liegen.

Nachfolgend wird die Funktionsweise des in Fig. 4 dargestellten WLAN-Netzes 10' erläutert.

Es sei nunmehr angenommen, dass der den Applikationsserver 310 betreibende Diensteanbieter dem Nutzer des mobilen Endgerätes 90' standdortbezogene Dienste innerhalb der geographischen Zone 340 anbieten möchte. Dazu werden vom Applikationsserver 310 neben den geographischen Daten, welche die geographische Zone 340 darstellen, auch der Teilnehmeridentifizierungscode des mobilen Endgerätes 90' zum Gateway 330 übertragen und dort im Speicher 333 abgelegt. Daraufhin prüft die Verwaltungseinrichtung 330, ob der Diensteanbieter berechtigt ist, das mobile Endgerät 90' zu lokalisieren, um ihm standortbezogene Dienste anbieten zu können. Obligatorisch oder optional kann die Verwaltungseinrichtung 330 prüfen, ob das mobile Endgerät 90' überhaupt zum Empfang von standortbezogenen Diensten vom Applikationsserver 310 freigeschaltet ist. Bei einer positiven Prüfung baut die Verwaltungseinrichtung 330 über die Schnittstelle 331 eine Verbindung über die Vermittlungseinrichtung 320 zum APID-Server 300 auf. Anschließend werden die geographischen Daten der geographischen Zone 340 zum APID-Server 300 übertragen und im Speicher 304 abgelegt. Unter Steuerung der Steuereinrichtung 307 ermittelt der APID-Ermittler 306 unter Zuhilfenahme der Nachschlagetabelle 302 und der im Speicher 304 abgespeicherten geographischen Zone 340 die Access-Points, die innerhalb der geographischen Zone 340 liegen. Im vorliegenden Beispiel sind dies die Access-Points mit den Bezugsnummern 350 bis 353. Der APID-Server 300 überträgt die Identifizierungscodes der aufgefundenen Access-Points 350 bis 353 über die Vermittlungseinrichtung 320 zum Gateway 330. Die empfangenen Identifizierungscodes APID werden beispielsweise im Speicher 333 der Verwaltungseinrichtung 330 abgelegt. Die Verwaltungseinrichtung 330 überträgt anschließend die Liste der Identifizierungscodes der Access-Points 350 bis 353, welche innerhalb der geographischen Zone 340 liegen, über die Vermittlungseinrichtung 320 zum mobilen Endgerät 90'. Die Liste der APID-Codes werden im APID-Speicher 92' des mobilen Endgerätes 90' abgelegt. Der Vergleicher 94' des mobilen Endgerätes 90' prüft nun, ob der Identifizierungscode des Access-Points, an welchem das mobile Endgerät 90'aktuell angemeldet ist, mit einem der im APID-Speicher 92' abgelegten Identifizierungscodes APID übereinstimmt. Wenn eine Übereinstimmung festgestellt wird, bedeutet das, dass sich das mobile Endgerät 90' innerhalb der geographischen Zone 340 befindet. Das mobile Endgerät 90' sendet einen entsprechenden Hinweis zum Gateway 330, welches wiederum Hinweissignale an den Applikationsserver 310, welches darauf hinweist, dass das mobile Endgerät 90' sich innerhalb der geographischen Zone 340 befindet. Daraufhin stellt der Applikationsserver 310 über die Vermittlungseinrichtung 320 und den Access-Point, an dem das mobile Endgerät 90' aktuell angemeldet ist, den standortbezogenen Dienst zur Verfügung. Für den Fall, dass die standortbezogene Applikation im Applikationsspeicher 97' des mobilen Endgerät 90' abgelegt ist, wird dieser Dienst automatisch ausgegeben, sobald der Vergleicher 94' feststellt, dass das mobile Endgerät 90' innerhalb der geographischen Zone 340 liegt. Eine entsprechende Mitteilung über das Auftreten dieses Ereignisses an die Verwaltungseinrichtung 330 und an den APID-Server 310 ist in diesem Fall nicht erforderlich.

Für den Fall, dass standortbezogene Dienste nicht nur über den im Internet installierten Applikationsserver 310 bereitgestellt werden, sondern in dem Applikationsspeicher 97' des mobilen Handgerät 90' abgelegt sind, übernimmt die Verwaltungseinrichtung 330 ferner die Aufgabe, das mobile Endgerät 90' ständig über die geographischen Zonen eines oder mehrerer Diensteanbieters und über die diesen Zonen zugeordneten standortbezogenen Dienste zu informieren.

## Patentansprüche

1. Verfahren zum Bereitstellen eines aufenthaltsortbezogenen Dienstes wenigstens einem mobilen Endgerät eines drahtlosen Kommunikationsnetzes (10; 10'), mit folgenden Schritten:
eine vorbestimmte geographische Zone (200; 340) wird von einer Verwaltungseinrichtung (110; 330) einem Applikationsserver (210; 310) zugeordnet;
die Position des mobilen Endgeräts (90; 90') wird ermittelt;
es wird geprüft, ob das mobile Endgerät sich innerhalb der geographischen Zone befindet,
der Applikationsserver (210; 310) wird von der Verwaltungseinrichtung benachrichtigt, wenn das mobile Endgerät (90; 90') sich in der vorbestimmten geographischen Zone (200; 340) aufhält; und
der Applikationsserver (210; 310) stellt dem mobilen Endgerät (90; 90') einen aufenthaltsortbezogenen Dienst über das drahtlose Kommunikationsnetz (10; 10') bereit, wenn das mobile Endgerät (90; 90') sich in der vorbestimmten geographischen Zone (200; 340) aufhält, wobei
das drahtlose Kommunikationsnetz ein zellulares Mobilfunknetz (10) ist, wobei jeder Zelle (70-70₆) des Mobilfunknetzes wenigstens ein Zellen-Identifikationscode (120-180) zugeordnet wird, und
wobei das mobile Endgerät seine Position ermittelt, indem das mobile Endgerät (90) über den Zellen-Identifikationscode der Zelle, in der es sich aktuell aufhält, informiert wird, und wobei
der Schritt zum Prüfen, ob sich das mobile Endgerät innerhalb der geographischen Zone befindet, folgende Schritte umfasst:
die Zellen-Identifikationscodes (120, 130, 140, 151-153 und 160-163) der Zellen (70-70₄), die zumindest teilweise in der vordefinierten geographischen Zone liegen, werden ermittelt;
die ermittelten Zellen-Identifikationscodes (120, 130, 140, 151-153 und 160-163) werden zu dem wenigstens einen mobilen Endgerät (90) übertragen und dort abgespeichert; und
der Zellen-Identifikationscode der Zelle, in der sich das mobile Endgerät aktuell aufhält, wird mit den abgespeicherten Zellen-Identifikationscodes (120, 130, 140, 151-153 und 160-163) verglichen; und wobei das mobile Endgerät (90) ein erstes Hinweissignal erzeugt und zur Verwaltungseinrichtung (110) überträgt, wenn der Zellen-Identifikationscode der Zelle, in der sich das mobile Endgerät aktuell aufhält, mit einem der abgespeicherten Zellen-Identifikationscodes übereinstimmt, und wobei
unter Ansprechen auf das erste Hinweissignal der Applikationsserver (210) von der Verwaltungseinrichtung (110) darüber informiert wird, dass das mobile Endgerät (90) sich in der vordefinierten geographischen Zone (200) aufhält,
**dadurch gekennzeichnet, dass**
eine weitere, vordefinierte geographische Zone dem Applikationsserver (200) zugeordnet wird;
die Zellen-Identifikationscodes der in der neuen, vordefinierten geographische Zone (200) enthaltenden Zellen ermittelt werden;
die Zellen-Identifikationscodes der geographischen Zone und der weiteren geographischen Zone verglichen werden; und dass
das mobile Endgerät in Abhängigkeit des Vergleichsergebnisses aufgefordert wird, neue Zellen-Identifikationscodes hinzuzufügen und/oder nicht mehr benötigte Zellen-Identifikationscodes zu löschen.

2. Verfahren nach Anspruch 1,
**dadurch gekennzeichnet, dass**
die geographischen Daten der vordefinierten geographischen Zone (200; 340) von der Verwaltungseinrichtung zum mobilen Endgerät übertragen und dort abgelegt wird, dass
das mobile Endgerät prüft, ob es sich innerhalb der geografischen Zone (200; 340) aufhält, und dass das mobile Endgerät (90; 90') die Verwaltungseinrichtung darauf hinweist, wenn es sich innerhalb der geographischen Zone aufhält.

3. Verfahren nach Anspruch 1,
**dadurch gekennzeichnet, dass**
das mobile Endgerät (90; 90') einen Teilnehmer-Identifikationscode sowie die ermittelte Position zur Verwaltungseinrichtung überträgt, und dass
die Verwaltungseinrichtung (110; 330) prüft, ob sich das mobile Endgerät innerhalb der geographischen Zone (200; 340) aufhält.

4. Verfahren nach Anspruch 1, 2 oder 3,
**dadurch gekennzeichnet, dass**
Daten zur Ermittlung der Position des mobilen Endgeräts (90; 90') von einem Navigationssystem, insbesondere einem GPS- oder A-GPS-Navigationssystem, anderen mobilen Endgeräten und/oder von Netzzugangseinrichtungen (350-362) zum mobilen Endgerät (90') übertragen werden.

5. Verfahren nach Anspruch 1,
**dadurch gekennzeichnet, dass**
der Zellen-Identifikationscode der Zelle, in der sich das mobile Endgerät aktuell aufhält, mit den abgespeicherten Zellen-Identifikationscodes (120, 130, 140, 151-153 und 160-163) verglichen wird, und dass das mobile Endgerät (90) ein zweites Hinweissignal erzeugt und zur Verwaltungseinrichtung (110) überträgt, wenn der Zellen-Identifikationscode der Zelle, in der sich das mobile Endgerät aktuell aufhält, nicht mehr mit einem der abgespeicherten Zellen-Identifikationscodes übereinstimmt; und dass unter Ansprechen auf das zweite Hinweissignal der Applikationsserver (210) von der Verwaltungseinrichtung (110) darüber informiert wird, dass das mobile Endgerät (90) die vordefinierte geographische Zone (200) verlassen hat.

6. Verfahren nach Anspruch 1 oder 5,
**dadurch gekennzeichnet, dass**
der Schritt zur Ermittlung der Zellen-Identifikationscodes (120, 130, 140, 151-153 und 160-163) der Zellen (70-70₄), die zumindest teilweise in der vordefinierten geographischen Zone liegen, folgende Schritte umfasst:
eine Vielzahl von Zellen-Identifikationscodes (120-180) wird im Mobilfunknetz (10) gespeichert;
jedem Zellen-Identifikationscode werden geographische Daten, die einen vorbestimmten geographischen Bereich darstellen, zugeordnet,
die den Zellen-Identifikationscodes zugeordneten geographischen Daten werden mit den der vordefinierten Zone zugeordneten geographischen Daten verglichen, um die Zellen-Identifikationscodes (120, 130, 140, 151-153 und 160-163) der Zellen zu ermitteln, die wenigstens teilweise innerhalb der vordefinierten geographischen Zone liegen.

7. Verfahren nach einem der Ansprüche 1, 5 oder 6,
**dadurch gekennzeichnet, dass**
die für eine vordefinierte geographische Zone (200) ermittelten Zellen-Identifikationscodes (120, 130, 140, 151-153 und 160-163) in der Verwaltungseinrichtung (110) gespeichert werden.

8. Verfahren nach einem der Ansprüche 1 oder 5 bis 7,
**dadurch gekennzeichnet, dass**
die den Zellen zugeordneten Zellen-Identifikationscodes zu vorbestimmten Zeitpunkten geändert werden.

9. Verfahren nach einem der Ansprüche 1 oder 5 bis 8,
**dadurch gekennzeichnet, dass**
das mobile Endgerät unter Ansprechen auf einen Löschbefehl veranlasst wird, wenigstens einen der der vordefinierten geographischen Zone zugeordneten Zellen-Identifikationscodes zu löschen.

10. Verfahren nach Anspruch 1,
**dadurch gekennzeichnet, dass**
das drahtlose Kommunikationsnetz (10') mehrere Netzzugangseinrichtungen (350-362) aufweist, denen jeweils ein Identifikationscode und ein Standort zugeordnet sind, dass
unter Steuerung der Verwaltungseinrichtung ((330) die Netzzugangseinrichtungen (350-353) ermittelt werden, die innerhalb der geographischen Zone (340) liegen, die Position des mobilen Endgeräts (90') ermittelt wird, indem die Netzzugangseihrichtung ermittelt wird, an der das mobile Endgerät (90') aktuell angemeldet ist, und dass
der Schritt zum Prüfen, ob das mobile Endgerät (90') sich innerhalb der geographischen Zone befindet, den Schritt enthält, dass geprüft wird, ob die Netzzugangseinrichtung, an der das mobile Endgerät angemeldet ist, sich innerhalb der vorbestimmten geographischen Zone (340) befindet.

11. Verfahren nach Anspruch 10,
**dadurch gekennzeichnet, dass**
die Verwaltungseinrichtung (330) die Identifikationscodes der Netzzugangseinrichtungen (350-353), die innerhalb der geographischen Zone (340) liegen, zum mobilen Endgerät (90') überträgt, dass das mobile Endgerät wenigstens eine Netzzugangseinrichtung ermittelt, an der das mobile Endgerät aktuell angemeldet ist, dass das mobile Endgerät anhand der Identifikationscodes prüft, ob die Netzzugangseinrichtung, an der das mobile Endgerät aktuell angemeldet ist, innerhalb der vorbestimmten geographischen Zone (340) liegt, und dass das mobile Endgerät die Verwaltungseinrichtung (330) informiert, wenn die Netzzugangseinrichtung, an der das mobile Endgerät aktuell angemeldet ist, innerhalb der vorbestimmten geographischen Zone (340) liegt.

12. Verfahren nach einem der Ansprüche 1 bis 11,
**gekennzeichnet durch** folgende Schritte:
von der Verwaltungseinrichtung (110; 330) wird geprüft, ob ein aufenthaltsbezogener Dienst dem wenigstens einen mobilen Endgerät (90; 90') bereitgestellt werden darf;
wenn ja, stellt der Applikationsserver (210; 310) einen aufenthaltsbezogenen Dienst nur diesem mobilen Endgerät bereit.

13. Verfahren nach einem der Ansprüche 1 bis 12,
**dadurch gekennzeichnet, dass**
wenigstens ein aufenthaltsortbezogener Dienst in einem Applikationsspeicher (97') des mobilen Endgeräts (90; 90') abgelegt wird, und dass dieser Dienst dem mobilen Endgerät bereitgestellt wird, wenn sich das mobile Endgerät in der vorbestimmten geographischen Zone (200; 340) aufhält.

14. Mobiles Kommunikationssystem zum Bereitstellen eines aufenthaltsortbezogenen Dienstes wenigstens einem mobilen Teilnehmer (90; 90') eines drahtlosen Kommunikationsnetzes (10; 10'), mit
einem Navigationssystem,
wenigstens einer Verwaltungseinrichtung (110; 330), wenigstens einem diensteanbietenden Applikationsserver (210; 310), der mit der Verwaltungseinrichtung (110; 330) verbunden ist,
wobei die Verwaltungseinrichtung (110; 330) derart ausgebildet ist, dass sie eine vordefinierte geographische Zone (200; 340) dem Applikationsserver (210; 310) zuordnet;
wobei die Verwaltungseinrichtung (110; 330) eine Schnittstelle (111; 331) zum Übertragen der geographischen Daten der geographischen Zone (200; 340) zu wenigstens einem mobilen Endgerät (90; 90') aufweist, welches
eine Schnittstelle 95; 95') zur Kommunikation mit der Verwaltungseinrichtung (110; 330),
eine Speichereinrichtung (92; 92') zum Speichern der von der Verwaltungseinrichtung (110; 330) empfangenen geographischen Zone (200; 340),
eine Empfangseinrichtung zum Empfangen von Positionsdaten,
eine Vergleichseinrichtung (94; 94') zum Vergleichen der geographischen Zone (200; 340) mit der aktuellen Position des mobilen Endgeräts, und
eine Einrichtung zum Erzeugen und Übertragen eines Hinweissignals, welches der Verwaltungseinrichtung (110; 330) anzeigt, dass sich das mobile Endgerät innerhalb der geographischen Zone aufhält, aufweist, wobei
die Verwaltungseinrichtung (110; 330) unter Ansprechen auf das Hinweissignal den Applikationsserver (210; 310) darüber informiert, dass das mobile Endgerät (90;90') sich in der vordefinierten geographischen Zone (200; 340) aufhält, **dadurch gekennzeichnet, dass** die Verwaltungseinrichtung das mobile Endgerät ständig über die geographischen Zonen eines oder mehrerer Diensteanbieter informiert, damit das mobile Endgerät in der Lage ist, auf Änderungen der geographischen Zone (200; 340) zu reagieren.

15. Mobiles Kommunikationssystem zum Bereitstellen von aufenthaltsortbezogenen Diensten wenigstens einem mobilen Teilnehmer (90) eines zellularen Mobilfunknetzes (10), wobei jeder Zelle (70-70₆) des Mobilfunknetzes wenigstens ein Zellen-Identifikationscode (120-180) zugeordnet ist, mit wenigstens einer Verwaltungseinrichtung (110), wenigstens einem diensteanbietenden Applikationsserver (210), der mit der Verwaltungseinrichtung (110) verbunden ist,
wobei die Verwaltungseinrichtung (110) derart ausgebildet ist, dass sie eine vordefinierte geographische Zone (200), die wenigstens eine Zelle enthält, dem Applikationsserver (210) zuordnet; wenigstens einem Zellen-Identifikationsserver (100), der auf eine Zuordnungstabelle (102) zugreifen kann, die jedem gespeicherten Zellen-Identifikationscode geographische Daten, die einen vorbestimmten geographischen Bereich darstellen, zuordnet,
wobei der Zellen-Identifikationsserver derart ausgebildet ist, dass er unter Ansprechen auf ein Anforderungssignal der Verwaltungseinrichtung (110) Zellen-Identifikationscodes der Zellen, die zumindest teilweise innerhalb der vordefinierten geographische Zone liegen, der Verwaltungseinrichtung (110) übergibt; wobei die Verwaltungseinrichtung (110) eine Schnittstelle (111) zum Übertragen der empfangenen Zellen-Identifikationscodes zu wenigstens einem mobilen Endgerät (90) aufweist, welches
eine Schnittstelle (95) zur Kommunikation mit der Verwaltungseinrichtung (110),
eine Speichereinrichtung (92) zum Speichern der von der Verwaltungseinrichtung empfangenen Zellen-Identifikationscodes,
eine Empfangseinrichtung zum Empfangen des Zellen-Identifikationscode der Zelle, in der sich das mobile Endgerät aktuell aufhält,
eine Vergleichseinrichtung (94) zum Vergleichen des Zellen-Identifikationscodes der Zelle, in der sich der mobile Teilnehmer aktuell aufhält, mit den abgespeicherten Zellen-Identifikationscodes, und
eine Einrichtung zum Erzeugen und Übertragen eines Hinweissignals, welches der Verwaltungseinrichtung (110; 330) anzeigt, dass der Zellen-Identifikationscode der Zelle, in der sich der mobile Teilnehmer aktuell aufhält, mit einem der abgespeicherten Zellen-Identifikationscodes übereinstimmt, aufweist, wobei die Verwaltungseinrichtung (110) unter Ansprechen auf das Hinweissignal den Applikationsserver (210) darüber informiert, dass das mobile Endgerät (90) sich in der vordefinierten geographischen Zone (200) aufhält, **dadurch gekennzeichnet, dass** die Verwaltungseinrichtung (110) derart ausgebildet ist, dass
sie eine weitere, vordefinierte geographische Zone dem Applikationsserver (200) zuordnet;
dass der Zellen-Identifikationsserver derart ausgebildet ist, dass er unter Ansprechen auf ein Anforderungssignal der Verwaltungseinrichtung (110) Zellen-Identifikationscodes der Zellen, die zumindest teilweise innerhalb der weiteren, vordefinierten geographischen Zone liegen, der Verwaltungseinrichtung (110) übergibt;
und dass die Verwaltungseinrichtung (110) derart ausgebildet ist, dass sie die Zellen-Identifikationscodes der geographischen Zone und der weiteren geographischen Zone vergleicht und das mobile Endgerät in Abhängigkeit des Vergleichsergebnisses auffordert, neue Zellen-Identifikationscodes hinzuzufügen und/oder nicht mehr benötigte Zellen-Identifikationscodes zu löschen.

16. Mobiles Kommunikationssystem nach Anspruch 14 oder 15,
**dadurch gekennzeichnet, dass**
der Applikationsserver (210) und die Verwaltungseinrichtung (110) über eine Internetverbindung kommunizieren.

17. Mobiles Kommunikationssystem nach Anspruch 15 oder 16,
**dadurch gekennzeichnet, dass**
die Verwaltungseinrichtung (110) eine Speichereinrichtung (113) aufweist, in der die Identifikationscodes vorbestimmter mobiler Endgeräte abgelegt sind.

18. Mobiles Endgerät zur Durchführung des Verfahrens nach einem der Ansprüche 1 bis 13, mit
einer Speichereinrichtung (92; 92') zum Speichern von einer vorbestimmten geographischen Zone (200; 340), von Identifizierungscodes der Netzzugangseinrichtungen (350-353), die innerhalb der geografischen Zone (340) liegen, und/oder von Zellen-Identifikationscodes, die jeweils einer, zumindest teilweise in der vorbestimmten geographischen Zone (200) liegenden Zelle (70-70₄) eines zellularen Mobilfunknetzes zugeordnet sind, einer Empfangseinrichtung zum Empfangen von Positionsdaten, des Identifizierungscodes der Netzzugangseinrichtung, an der das mobile Endgerät (90') aktuell angemeldet ist, und/oder des Zellen-Identifikationscodes der Zelle, in der sich das mobile Endgerät aktuell aufhält,
einer Vergleichseinrichtung (94; 94') zum Vergleichen des Zellen-Identifikationscodes der Zelle, in der sich das mobile Endgerät aktuell aufhält, mit den abgespeicherten Zellen-Identifikationscodes, zum Vergleichen der Positionsdaten mit der geographischen Zone und/oder zum Vergleichen des Identifizierungscodes der Netzzugangseinrichtung, an der das mobile Endgerät aktuell angemeldet ist, mit den gespeicherten Identifizierungscodes der innerhalb der geographischen Zone liegenden Netzzugangseinrichtungen,
einer Einrichtung zum Erzeugen eines Hinweissignals, das anzeigt, dass sich der mobile Teilnehmer innerhalb der geographischen Zone aufhält, **dadurch gekennzeichnet, dass** das mobile Endgerät dazu ausgebildet ist, von einer Verwaltungseinrichtung ständig über die geographischen Zonen eines oder mehrerer Diensteanbieter informiert zu werden, damit das mobile Endgerät in der Lage ist, auf Änderungen der vorbestimmten geographischen Zone (200; 340) zu reagieren.

## Claims

1. A method for providing a location based service to at least one mobile terminal in a wireless communication network (10; 10'), comprising the steps of:
allocating a predefined geographic zone (200; 340) to an application server (210; 310), by a management device (110; 330);
determining the location of the mobile terminal (90; 90');
checking whether the mobile terminal is located within said geographic zone;
notifying to the application server (210; 310), by the management device, when the mobile terminal (90; 90') is located within said predefined geographic zone (200; 340); and
providing a location based service, by the application server (210; 310), via the wireless communication network (10; 10') to the mobile terminal (90; 90'), when the mobile terminal (90; 90') is located within the predefined geographic zone (200; 340); wherein
the wireless communication network is a cellular mobile communication network (10), each cell (70 - 706) of the mobile communication network having allocated thereto at least one cell identification code (120 - 180); and
wherein the mobile terminal (90) determines its location by being informed about the cell identification code of the cell in which it is currently located; and wherein
the step of checking whether the mobile terminal is located within the geographic zone comprising the steps of:
determining the cell identification codes (120, 130, 140, 151 - 153, and 160 - 163) of the cells (70 - 704) which are at least partially in said predefined geographical region;
transferring the determined cell identification codes (120, 130, 140, 151 - 153, and 160 - 163) to and storing them in the at least one mobile terminal (90); and
comparing the cell identification code of the cell in which the mobile terminal is currently located with the stored cell identification codes (120, 130, 140, 151 - 153, and 160 - 163); and wherein
the mobile terminal (90) generates a first notification signal to transmit it to the management device (110), when the cell identification code of the cell in which the mobile terminal is currently located matches any one of the stored cell identification codes; and wherein in response to the first notification signal, the management device (110) informs the application server (210) that the mobile terminal (90) is located in said predefined geographic zone (200);
**characterized in that**
a further predefined geographic zone is allocated to the application server (200);
the cell identification codes of the cells included in the newly predefined geographic zone (200) are determined;
the cell identification codes of the geographic zone and the further geographic zone are compared; and that the mobile terminal is prompted to add new cell identification codes and/or to delete cell identification codes that are no longer required, as a function of the comparison result.

2. The method as claimed in claim 1,
**characterized in that**
the geographical data of the predefined geographic zone (200; 340) are transmitted from the management device to the mobile terminal and stored therein; that the mobile terminal checks whether it is located within said geographic zone (200; 340); and that the mobile terminal (90; 90') notifies to the management device when it is located within said geographic zone.

3. The method as claimed in claim 1,
**characterized in that**
the mobile terminal (90; 90') transmits a subscriber identification code and the determined location to the management device; and that the management device (110; 330) checks whether the mobile terminal is located within said geographic zone (200; 340).

4. The method of claim 1, 2 or 3,
**characterized in that**
data for determining the location of the mobile terminal (90; 90') are transferred from a navigation system, in particular a GPS or A-GPS navigation system, to other mobile terminals, and/or from network access devices (350 - 362) to the mobile terminal (90').

5. The method as claimed in claim 1,
**characterized in that**
the cell identification code of the cell in which the mobile terminal is currently located is compared with the stored cell identification codes (120, 130, 140, 151 - 153 and 160 - 163); and that
the mobile terminal (90) generates and transmits a second notification signal to the management device (110), when the cell identification code of the cell in which the mobile terminal is located does no longer matches any one of the stored cell identification codes;
and that
in response to the second notification signal, the application server (210) is informed by the management device (110) that the mobile terminal (90) has left the predefined geographic zone (200).

6. The method of claim 1 or 5,
**characterized in that**
the step of determining the cell identification codes (120, 130, 140, 151 - 153, and 160 - 163) of the cells (70 - 704) which are at least partially within the predefined geographic zone comprises the steps of:
storing a plurality of cell identification codes (120 - 180) in the mobile communication network (10);
allocating geographical data which represent a predefined geographic zone to each of the cell identification codes;
comparing the geographical data allocated to the cell identification codes with the geographical data allocated to the predetermined zone, to determine the cell identification codes (120, 130, 140, 151 - 153 and 160 - 163) of those cells which are at least partially within said predefined geographic zone.

7. The method as claimed in any of claims 1, 5 or 6, **characterized in that**
the cell identification codes (120, 130, 140, 151 - 153, and 160 - 163) determined for a predefined geographic zone (200) are stored in the management device (110).

8. The method as claimed in any of claims 1 or 5 to 7,
**characterized in that**
the cell identification codes allocated to the cells are changed at predefined times.

9. The method as claimed in any of claims 1 or 5 to 8,
**characterized in that**
in response to a delete command the mobile terminal is caused to delete at least one of the cell identification codes allocated to the predefined geographic zone.

10. The method as claimed in claim 1,
**characterized in that**
the wireless communication network (10') comprises a plurality of network access devices (350 - 362) each of which has allocated thereto an identification code and a location; that
under control of the management device (330) those network access devices (350 - 353) are determined which are within the geographic zone (340);
the location of the mobile terminal (90') is determined by determining the network access device at which the mobile terminal (90') is currently logged in; and that the step of checking whether the mobile terminal (90') is located within the geographic zone comprises the step of checking whether the network access device at which the mobile terminal is logged in is within the predefined geographic zone (340).

11. The method as claimed in claim 10,
**characterized in that**
the management device (330) transmits the identification codes of those network access devices (350; 353) which are located within the geographic zone (340) to the mobile terminal (90'); that the mobile terminal determines at least one network access device, at which the mobile terminal is currently logged **in; that**
the mobile terminal checks, based on the identification codes, whether the network access device at which the mobile terminal is currently logged in is within the predefined geographic zone (340); and that the mobile terminal informs the management device (330) when the network access device at which the mobile terminal is currently logged in is within the predefined geographic zone (340).

12. The method as claimed in any of claims 1 to 11,
**characterized by** the steps of:
checking, by the management device (110; 330), whether a location based service is allowed to be provided to the at least one mobile terminal (90; 90');
and if so, providing a location based service to only this mobile terminal, by the application server (210; 310).

13. The method as claimed in any of claims 1 to 12,
**characterized in that**
at least one location based service is stored in an application memory (97') of the mobile terminal (90; 90'); and that this service is provided to the mobile terminal when the mobile terminal is located within the predefined geographic zone (200; 340).

14. A mobile communication system for providing a location based service to at least one mobile subscriber (90; 90') of a wireless communication network (10; 10'), comprising:
a navigation system;
at least one management device (110; 330);
at least one service-providing application server (210; 310) connected to the management device (110; 330); wherein the management device (110; 330) is adapted to allocate a predefined geographic zone (200; 340) to said application server (210; 310);
wherein the management device (110; 330) includes an interface (111; 331) for transmitting the geographical data of the geographic zone (200; 340) to at least one mobile terminal (90; 90') which comprises an interface (95; 95') for communicating with the management device (110; 330);
a memory means (92; 92') for storing the geographic zone (200; 340) received from the management device (110; 330);
a receiving means for receiving location data;
a comparison means (94; 94') for comparing the geographic zone (200; 340) with the current location of the mobile terminal; and
a means for generating and transmitting a notification signal indicating to the management device (110; 330) that the mobile terminal is located within the geographic zone; wherein
the management device (110; 330) is responsive to the notification signal to inform the application server (210; 310) that the mobile terminal (90; 90') is located in the predefined geographic zone (200; 340);
**characterized in that** the management device continuously informs the mobile terminal about the geographic zones of one or more service provider(s), so that the mobile terminal is able to respond to changes of the geographic zone (200; 340).

15. A mobile communication system for providing location based services to at least one mobile subscriber (90) of a cellular mobile communication network (10), wherein each cell (70 - 70₆) of the mobile communication network has allocated thereto at least one cell identification code (120 - 180), comprising:
at least one management device (110);
at least one service-providing application server (210) connected to the management device (110);
wherein the management device (110) is adapted to allocate a predefined geographic zone (200) that comprises at least one cell to the application server (210);
at least one cell identification server (100) which is allowed to access an allocation table (102) which associates geographical data representing a predefined geographic zone to each of the stored cell identification codes;
wherein the cell identification server is adapted to be responsive to a request signal from the management device (110) to pass cell identification codes of the cells which are at least partially in the predefined geographic zone to the management device (110);
wherein the management device (110) includes an interface (111) for transmitting the received cell identification codes to at least one mobile terminal (90) which comprises:
an interface (95) for communicating with the management device (110);
a memory means (92) for storing the cell identification codes received from the management device;
a receiving means for receiving the cell identification code of the cell in which the mobile terminal is currently located;
a comparison means (94) for comparing the cell identification codes of the cell in which the mobile subscriber is currently located to the stored cell identification codes; and
a means for generating and transmitting a notification signal indicating to the management device (110; 330) that the cell identification code of the cell in which the mobile subscriber is currently located matches one of the stored cell identification codes; wherein
the management device (110) is responsive to the notification signal to inform the application server (210) that the mobile terminal (90) is located in said predefined geographic zone (200);
**characterized in that**
the management device (110) is adapted to allocate a further predefined geographic zone to the application server (200); that
the cell identification server is adapted to be responsive to a request signal from the management device (110) to pass cell identification codes of the cells which are at least partially within the further predefined geographic zone to the management device (110); and that
the management device (110) is adapted to compare the cell identification codes of the geographic zone and of the further geographic zone, and, as a function of the comparison result, to prompt the mobile terminal to add new cell identification codes and/or to delete cell identification codes that are no longer required.

16. The mobile communication system as claimed in claim 14 or 15, **characterized in that**
the application server (210) and the management device (110) are in communication via an internet confection.

17. The mobile communication system as claimed in claim 15 or 16, **characterized in that**
the management device (110) includes a memory means (113) in which the identification codes of predefined mobile terminals are stored.

18. A mobile terminal for performing the method as claimed in any of claims 1 to 13, comprising
a memory means (92; 92') for storing a predefined geographic zone (200; 340), identification codes of network access devices (350 - 353) which are located within the geographic zone (340), and/or cell identification codes allocated to a respective one of cells (70 - 70₄) of a cellular mobile communications network which is at least partially within the predefined geographic zone (200);
a receiving means for receiving location data, the identification code of the network access device at which the mobile terminal (90') is currently logged in, and/or the cell identification codes of the cell in which the mobile terminal is currently located;
a comparison means (94; 94') for comparing the cell identification codes of the cell in which the mobile terminal is currently located with the stored cell identification codes, for comparing the location data with the geographic zone, and/or for comparing the identification code of the network access device at which the mobile terminal is currently logged in with the stored identification codes of the network access devices located within the geographic zone;
a means for generating a notification signal which indicates that the mobile subscriber is located within the geographic zone;
**characterized in that** the mobile terminal is adapted to continuously receive information about the geographic zones of one or more service providers from a management device, so that the mobile terminal is able to respond to changes of the predefined geographic zone (200; 340).

## Revendications

1. Procédé de fourniture d'un service dépendant de la position à au moins un terminal mobile d'un réseau de communication sans fil (10 ; 10'), comportant les étapes suivantes :
une zone géographique (200 ; 340) prédéfinie est attribuée à un serveur d'applications (210 ; 310) par un dispositif d'administration (110 ; 330) ;
la position du terminal mobile (90 ; 90') est déterminée ;
il est contrôlé si le terminal mobile se trouve à l'intérieur de la zone géographique,
le serveur d'applications (210 ; 310) est informé par le dispositif d'administration si le terminal mobile (90 ; 90') se trouve dans la zone géographique (200 ; 340) ; et
le serveur d'applications (210 ; 310) fournit au terminal mobile (90 ; 90') un service dépendant de la position via le réseau de communication (10 ; 10') si le terminal mobile (90 ; 90') se trouve dans la zone géographique (200 ; 340) prédéfinie,
le réseau de communication sans fil étant un réseau cellulaire de téléphonie mobile (10), au moins un code d'identification de cellule (120-180) étant affecté à chaque cellule (70-70₆) du réseau de téléphonie mobile, le terminal mobile déterminant sa position en informant le terminal mobile (90) du code d'identification de la cellule où il se trouve actuellement, et
l'étape de contrôle si le terminal mobile se trouve à l'intérieur de la zone géographique comprenant les étapes suivantes :
les codes d'identification (120, 130, 140, 151-153 et 160-163) des cellules (70-70₄) situées au moins en partie dans la zone géographique prédéfinie sont déterminés ;
les codes d'identification de cellule (120, 130, 140, 151-153 et 160-163) déterminées sont transmis au terminal ou aux terminaux mobiles (90) où ils sont mémorisés ; et
le code d'identification de la cellule où se trouve actuellement le terminal mobile est comparé aux codes d'identification de cellule (120, 130, 140, 151-153 et 160-163) mémorisés ; et
le terminal mobile (90) générant un premier signal d'avertissement et transmettant celui-ci au dispositif d'administration (110) si le code d'identification de la cellule où se trouve actuellement le terminal mobile correspond à un des codes d'identification de cellule mémorisés, et
le serveur d'applications (210) étant informé par le dispositif d'administration (110) en réaction au premier signal d'avertissement que le terminal mobile (90) se trouve dans la zone géographique (200) prédéfinie,
**caractérisé en ce que**
une autre zone géographique prédéfinie est attribuée au serveur d'applications (200) ;
les codes d'identification des cellules contenues dans la nouvelle zone géographique (200) prédéfinie sont déterminés ;
les codes d'identification de cellule de la zone géographique et de l'autre zone géographique sont comparés ; et
en fonction du résultat de la comparaison, il est demandé au terminal mobile d'ajouter de nouveaux codes d'identification de cellule et/ou de supprimer des codes d'identification de cellule qui ne sont plus nécessités.

2. Procédé selon la revendication 1,
**caractérisé en ce que**
les données géographiques de la zone géographique (200 ; 340) prédéfinie sont transmises par le dispositif d'administration au terminal mobile où elles sont mémorisées,
le terminal mobile contrôle s'il se trouve à l'intérieur de la zone géographique (200 ; 340), et
le terminal mobile (90 ; 90') avertit le dispositif d'administration s'il se trouve à l'intérieur de la zone géographique.

3. Procédé selon la revendication 1,
**caractérisé en ce que**
le terminal mobile (90 ; 90') transmet un code d'identification d'abonné ainsi que la position déterminée au dispositif d'administration, et
le dispositif d'administration (110 ; 330) contrôle si le terminal mobile se trouve à l'intérieur de la zone géographique (200 ; 340).

4. Procédé selon la revendication 1, 2 ou 3, **caractérisé en ce que**
des données de détermination de la position du terminal mobile (90 ; 90') sont transmises par un système de navigation, en particulier un système de navigation GPS ou A-GPS, à d'autres terminaux mobiles, et/ou par des dispositifs de connexion au réseau (350-362) au terminal mobile (90').

5. Procédé selon la revendication 1,
**caractérisé en ce que**
le code d'identification de la cellule où se trouve actuellement le terminal mobile est comparé aux codes d'identification de cellule (120, 130, 140, 151-153 et 160-163) mémorisés, et **en ce que** le terminal mobile (90) génère un deuxième signal d'avertissement et transmet celui-ci au dispositif d'administration (110) si le code d'identification de la cellule où se trouve actuellement le terminal mobile ne correspond plus à un des codes d'identification de cellule mémorisés ; et **en ce que** le serveur d'applications (210) est informé par le dispositif d'administration (110) en réaction au deuxième signal d'avertissement que le terminal mobile (90) a quitté la zone géographique (200) prédéfinie.

6. Procédé selon la revendication 1 ou 5,
**caractérisé en ce que**
l'étape de détermination des codes d'identification (120, 130, 140, 151-153 et 160-163) des cellules (70-70₄) situées au moins en partie dans la zone géographique prédéfinie comprend les étapes suivantes :
une pluralité de codes d'identification de cellule (120-180) est sauvegardée dans le réseau de téléphonie mobile (10) ;
des données géographiques représentant une zone géographique prédéfinie sont affectées à chaque code d'identification de cellule,
les données géographiques associées aux codes d'identification de cellule sont comparées aux données géographiques associées à la zone prédéfinie pour déterminer les codes d'identification (120, 130, 140, 151-153 et 160-163) des cellules situées au moins en partie à l'intérieur de la zone prédéfinie.

7. Procédé selon l'une des revendications 1, 5 ou 6,
**caractérisé en ce que**
les codes d'identification de cellule (120, 130, 140, 151-153 et 160-163) déterminés pour une zone prédéfinie (200) sont mémorisés dans le dispositif d'administration (110).

8. Procédé selon l'une des revendications 1 ou 5 à 7,
**caractérisé en ce que**
les codes d'identification de cellule attribués aux cellules sont modifiés à des moments prédéfinis.

9. Procédé selon l'une des revendications 1 ou 5 à 8,
**caractérisé en ce que**
en réaction à une instruction de suppression, le terminal mobile est entraîné à supprimer au moins un des codes d'identification de cellule associés à la zone géographique prédéfinie.

10. Procédé selon la revendications 1,
**caractérisé en ce que**
le réseau de communication sans fil (10') comporte plusieurs dispositifs de connexion au réseau (350-362), à chacun desquels un code d'identification et un site sont attribués,
par commande du dispositif d'administration (330), les dispositifs de connexion au réseau (350-353) situés à l'intérieur de la zone géographique (340) sont déterminés, la position du terminal mobile (90') est déterminée en déterminant le dispositif de connexion au réseau auquel le terminal mobile (90') est actuellement déclaré, et
l'étape de contrôle si le terminal mobile (90') se trouve à l'intérieur de la zone géographique comprend l'étape de contrôle si le dispositif de connexion au réseau auquel le terminal mobile est déclaré se trouve à l'intérieur de la zone géographique (340) prédéfinie.

11. Procédé selon la revendication 10,
**caractérisé en ce que**
le dispositif d'administration (330) transmet les codes d'identification des dispositifs de connexion au réseau (350-353) situés à l'intérieur de la zone géographique (340) au terminal mobile (90'),
le terminal mobile détermine au moins un dispositif de connexion au réseau auquel le terminal mobile est actuellement déclaré,
le terminal mobile contrôle sur la base des codes d'identification si le dispositif de connexion au réseau auquel le terminal mobile est actuellement déclaré, se trouve à l'intérieur de la zone géographique (340) prédéfinie, et
le terminal mobile informe le dispositif d'administration (330) si le dispositif de connexion au réseau auquel le terminal mobile est actuellement déclaré, se trouve à l'intérieur de la zone géographique (340) prédéfinie.

12. Procédé selon l'une des revendications 1 à 11, **caractérisé par** les étapes suivantes :
il est contrôlé par le dispositif d'administration (110 ; 330) si un service dépendant de la position peut être fourni au terminal ou aux terminaux mobiles (90 ; 90') ; si oui, le serveur d'applications (210 ; 310) ne fournit un service dépendant de la position qu'audit terminal ou auxdits terminaux mobiles.

13. Procédé selon l'une des revendications 1 à 12,
**caractérisé en ce que**
au moins un service dépendant de la position est mémorisé (97') dans le terminal mobile (90 ; 90'), et **en ce que** ledit service est fourni au terminal mobile si le terminal mobile se trouve dans la zone géographique (200 ; 340) prédéfinie.

14. Système de communication mobile pour la fourniture de services dépendant de la position au moins un terminal mobile (90 ; 90') d'un réseau de communication sans fil (10 ; 10'), avec
un système de navigation,
au moins un dispositif d'administration (110 ; 330), au moins un serveur d'applications (210 ; 310) fournisseur de services relié au dispositif d'administration (110 ; 330),
le dispositif d'administration (110 ; 330) étant réalisé de manière à attribuer une zone géographique (200 ; 340) prédéfinie au serveur d'applications (210 ; 310) ;
le dispositif d'administration (110 ; 330) comportant une interface (111 ; 331) pour la transmission de la zone géographique (200 ; 340) à au moins un terminal mobile (90 ; 90')
qui comporte une interface (95 ; 95') de communication avec le dispositif d'administration (110 330),
un dispositif de mémorisation (92 ; 92'), pour la mémorisation de la zone géographique (200 ; 340) reçue du dispositif d'administration (110 ; 330),
un dispositif de réception, pour la réception de données de position,
un dispositif de comparaison (94 ; 94'), pour la comparaison de la zone géographique (200 ; 340) avec la position actuelle du terminal mobile, et
un dispositif de génération et de transmission d'un signal d'avertissement informant le dispositif d'administration (110 ; 330) que le terminal mobile se trouve à l'intérieur de la zone géographique,
le dispositif d'administration (110 ; 330) informant le serveur d'applications (210 ; 310) que le terminal mobile (90 ; 90') se trouve dans la zone géographique (200 ; 340) prédéfinie, en réaction au signal d'avertissement, **caractérisé en ce que** le dispositif d'administration informe constamment le terminal mobile sur les zones géographiques d'un ou de plusieurs fournisseurs de services, afin que ledit terminal mobile soit en mesure de réagir à des modifications de la zone géographique (200 ; 340).

15. Système de communication mobile pour la fourniture de services dépendant de la position à au moins un terminal mobile (90) d'un réseau cellulaire de téléphonie mobile (10), au moins un code d'identification de cellule (120-180) étant attribué à chaque cellule (70-70₆) du réseau de téléphonie mobile, avec au moins un dispositif d'administration (110), au moins un serveur d'applications (210) fournisseur de services relié au dispositif d'administration (110),
le dispositif d'administration (110) étant réalisé de manière à attribuer une zone géographique (200) prédéfinie contenant au moins une cellule au serveur d'applications (210) ;
au moins un serveur d'identification de cellules (100) pouvant accéder à un tableau d'affectation (102) qui attribue des données géographiques représentant une zone géographique prédéfinie à chaque code d'identification de cellule mémorisé, le serveur d'identification de cellules étant réalisé de manière à transmettre au dispositif d'administration (110) des codes d'identification des cellules situées au moins en partie à l'intérieur de la zone géographique prédéfinie, en réaction à un signal de demande du dispositif d'administration (110) ;
le dispositif d'administration (110) comportant une interface (111) pour la transmission des codes d'identification de cellule reçus à au moins un terminal mobile (90) qui comporte
une interface (95) de communication avec le dispositif d'administration (110),
un dispositif de mémorisation (92), pour la mémorisation des codes d'identification de cellule reçus du dispositif d'administration,
un dispositif de réception, pour la réception du code d'identification de la cellule où se trouve actuellement le terminal mobile,
un dispositif de comparaison (94), pour la comparaison du code d'identification de la cellule où se trouve actuellement l'abonné mobile, avec les codes d'identification de cellule mémorisés, et
un dispositif de génération et de transmission d'un signal d'avertissement informant le dispositif d'administration (110 ; 330) que le code d'identification de la cellule où se trouve actuellement l'abonné mobile correspond à un des codes d'identification de cellule mémorisés,
le dispositif d'administration (110) informant le serveur d'applications (210) que le terminal mobile (90) se trouve dans la zone géographique (200) prédéfinie, en réaction au signal d'avertissement,
**caractérisé en ce que** le dispositif d'administration (110) est réalisé de manière à attribuer une autre zone géographique prédéfinie au serveur d'applications (200) ;
le serveur d'identification de cellules est réalisé de manière à transmettre au dispositif d'administration (110) des codes d'identification des cellules situées au moins en partie à l'intérieur de l'autre zone géographique prédéfinie, en réaction à un signal de demande du dispositif d'administration (110) ;
et le dispositif d'administration (110) est réalisé de manière à comparer les codes d'identification de cellule de la zone géographique et de l'autre zone géographique, et à demander au terminal mobile d'ajouter de nouveaux codes d'identification de cellule et/ou de supprimer des codes d'identification de cellule qui ne sont plus nécessités, en fonction du résultat de la comparaison.

16. Système de communication mobile selon la revendication 14 ou 15,
**caractérisé en ce que**
le serveur d'applications (210) et le dispositif d'administration (110) communiquent au moyen d'une connexion Internet.

17. Système de communication mobile selon la revendication 15 ou la revendication 16,
**caractérisé en ce que**
le dispositif d'administration (110) comporte un dispositif de mémorisation (113) où sont sauvegardés les codes d'identification de terminaux mobiles prédéfinie.

18. Terminal mobile pour l'exécution du procédé selon l'une des revendications 1 à 13, avec
un dispositif de mémorisation (92 ; 92') pour la mémorisation d'une zone géographique (200 ; 340) prédéfinie, de codes d'identification des dispositifs de connexion au réseau (350-353) situés à l'intérieur de la zone géographique (340), et/ou de codes d'identification de cellule attribués chacun à une cellule (70-70₄) d'un réseau cellulaire de téléphonie mobile contenue au moins en partie dans la zone géographique (200) prédéfinie,
un dispositif de réception pour la réception de données de position, du code d'identification du dispositif de connexion au réseau auquel le terminal mobile (90') est actuellement déclaré, et/ou du code d'identification de la cellule où se trouve actuellement le terminal mobile,
un dispositif de comparaison (94 ; 94') pour la comparaison du code d'identification de la cellule où se trouve actuellement le terminal mobile avec les codes d'identification de cellule mémorisés, pour la comparaison des données de position avec la zone géographique et/ou pour la comparaison du code d'identification du dispositif de connexion au réseau auquel le terminal mobile est actuellement déclaré avec les codes d'identification mémorisés des dispositifs de connexion au réseau situés à l'intérieur de la zone géographique,
un dispositif de génération d'un signal d'avertissement indiquant que le terminal mobile se trouve à l'intérieur de la zone géographique, **caractérisé en ce que** ledit terminal mobile est réalisé pour être informé constamment par un dispositif d'administration sur les zones géographiques d'un ou de plusieurs fournisseurs de services, afin que ledit terminal mobile soit en mesure de réagir à des modifications de la zone géographique (200 ; 340) prédéfinie.
